(19) Europäisches Patentamt
European Patent Office
Office européen des brevets

(11) **EP 4 654 699 A1**

(12) **EUROPEAN PATENT APPLICATION**
published in accordance with Art. 153(4) EPC

(43) Date of publication:
26.11.2025 Bulletin 2025/48

(21) Application number: 23945342.6

(22) Date of filing: 14.07.2023

(51) International Patent Classification (IPC):
*H04W 72/04* (2023.01)

(52) Cooperative Patent Classification (CPC):
H04W 72/04

(86) International application number:
PCT/CN2023/107415

(87) International publication number:
WO 2025/015442 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **GUANGDONG OPPO MOBILE
TELECOMMUNICATIONS
CORP., LTD.
Dongguan, Guangdong 523860 (CN)**

(72) Inventor: **ZHANG, Shichang
Dongguan, Guangdong 523860 (CN)**

(74) Representative: **Mewburn Ellis LLP
Aurora Building
Counterslip
Bristol BS1 6BX (GB)**

(54) **METHOD FOR RADIO COMMUNICATION, AND COMMUNICATION DEVICE**

(57)    A wireless communication method and a communication device are provided. The wireless communication method includes the following. A first device determines a first resource configuration, where the first resource configuration is used for configuring a sidelink positioning reference signal (SL PRS) resource in a resource pool.

```
        ┌──────────────┐
        │    START     │
        └──────┬───────┘
               │
 ┌─────────────┴─────────────┐
 │ DETERMINE, BY FIRST       │──── S1910
 │ DEVICE, FIRST RESOURCE    │
 │ CONFIGURATION             │
 └─────────────┬─────────────┘
               │
        ┌──────┴───────┐
        │     END      │
        └──────────────┘
```

FIG. 19

**Description**

TECHNICAL FIELD

The disclosure relates to the field of communication technology, and more particularly, to a wireless communication method and a communication device.

BACKGROUND

For some communication systems such as a new radio (NR) system, introduction of sidelink (SL)-based positioning is desired to enhance positioning technology. After SL-based positioning is introduced, a resource pool may be shared between a resource for SL positioning reference signal (SL PRS) transmission and a resource for another SL information. In this case, how to determine an SL PRS resource is a problem to be solved.

SUMMARY

The disclosure provides a wireless communication method and a communication device. Various aspects of the disclosure are described below.

In a first aspect, a wireless communication method is provided. The method includes the following. A first device determines a first resource configuration, where the first resource configuration is used for configuring a sidelink positioning reference signal (SL PRS) resource in a resource pool.

In a second aspect, a communication device is provided. The communication device is a first device. The communication device includes a determining module. The determining module is configured to determine a first resource configuration, where the first resource configuration is used for configuring an SL PRS resource in a resource pool.

In a third aspect, a communication device is provided. The communication device includes a processor, a memory, and a communication interface. The memory is configured to store one or more computer programs. The processor is configured to invoke the computer programs from the memory, to cause the communication device to perform some or all of the steps in the method of the first aspect.

In a fourth aspect, a communication system is provided in embodiments of the disclosure. The system includes the foregoing communication device. In another possible design, the system can further include another device for interacting with the communication device in the solutions provided in embodiments of the disclosure.

In a fifth aspect, a computer-readable storage medium is provided in embodiments of the disclosure. The computer-readable storage medium is configured to store computer programs which are operable with a communication device to perform some or all of the steps in the methods in the foregoing aspects.

In a sixth aspect, a computer program product is provided in embodiments of the disclosure. The computer program product includes a non-transitory computer-readable storage medium configured to store computer programs which are operable with a communication device to perform some or all of the steps in the methods in the foregoing aspects. In some implementations, the computer program product can be a software installation package.

In a seventh aspect, a computer program is provided in embodiments of the disclosure. The computer program is operable with a communication device to perform some or all of the steps in the methods of the foregoing aspects.

In an eighth aspect, a chip is provided in embodiments of the disclosure. The chip includes a memory and a processor. The processor can invoke and execute computer programs from the memory, to implement some or all of the steps described in the methods in the foregoing aspects.

In embodiments of the disclosure, the first device can determine a related configuration (i. e. the first resource configuration) for configuring an SL PRS resource in the resource pool, which is beneficial for the first device to select a suitable SL PRS resource from the resource pool according to the first resource configuration, so as to realize SL PRS transmission and reception.

BRIEF DESCRIPTION OF THE DRAWINGS

FIG. 1 is an exemplary system architectural diagram of a wireless communication system to which embodiments of the disclosure can be applied.

FIG. 2 is an exemplary diagram illustrating a scenario of in-coverage sidelink (SL) communication.

FIG. 3 is an exemplary diagram illustrating a scenario of partial-coverage SL communication.

FIG. 4 is an exemplary diagram illustrating a scenario of out-of-coverage SL communication.

FIG. 5 is a diagram illustrating a scenario of central control node-based SL communication.

FIG. 6 is an exemplary diagram illustrating broadcast-based SL communication.

FIG. 7 is an exemplary diagram illustrating unicast-based SL communication.

FIG. 8 is an exemplary diagram illustrating groupcast-based SL communication.

FIG. 9 is an exemplary diagram illustrating a slot structure for an SL communication system.

FIG. 10 is an exemplary structural diagram illustrating $2^{nd}$-stage sidelink control information (SCI) in a slot.

FIG. 11 is an exemplary diagram illustrating time-domain positions of physical sidelink control channel-demodulation reference signal (PSCCH DMRS) symbols in one slot.

FIG. 12 is an exemplary diagram illustrating single-symbol DMRS frequency-domain type 1.

FIG. 13 is an exemplary diagram illustrating a PSCCH and physical sidelink shared channel (PSSCH) resource pool.

FIG. 14 is a schematic diagram illustrating a slot structure for a new radio (NR) system.

FIG. 15 is an exemplary diagram illustrating resources for downlink positioning reference signal (DL PRS) transmission.

FIG. 16 is a schematic structural diagram illustrating interlaced resource blocks (IRBs).

FIG. 17 is an exemplary diagram illustrating a frame structure for a sidelink over unlicensed spectrum (SL-U) system.

FIG. 18 is an exemplary diagram illustrating RB sets.

FIG. 19 is a schematic flowchart of a wireless communication method provided in an embodiment of the disclosure.

FIG. 20 is a schematic diagram illustrating a slot structure provided in an embodiment of the disclosure.

FIG. 21 is a schematic diagram illustrating a slot structure provided in another embodiment of the disclosure.

FIG. 22 is a schematic diagram illustrating a slot structure provided in another embodiment of the disclosure.

FIG. 23 is a schematic flowchart of a wireless communication method provided in another embodiment of the disclosure.

FIG. 24 is a schematic structural diagram of a communication device provided in embodiments of the disclosure.

FIG. 25 is a schematic structural diagram of a communication apparatus provided in embodiments of the disclosure.

DETAILED DESCRIPTION

The following describes the technical solutions of the disclosure with reference to the accompanying drawings.

**Communication system architecture**

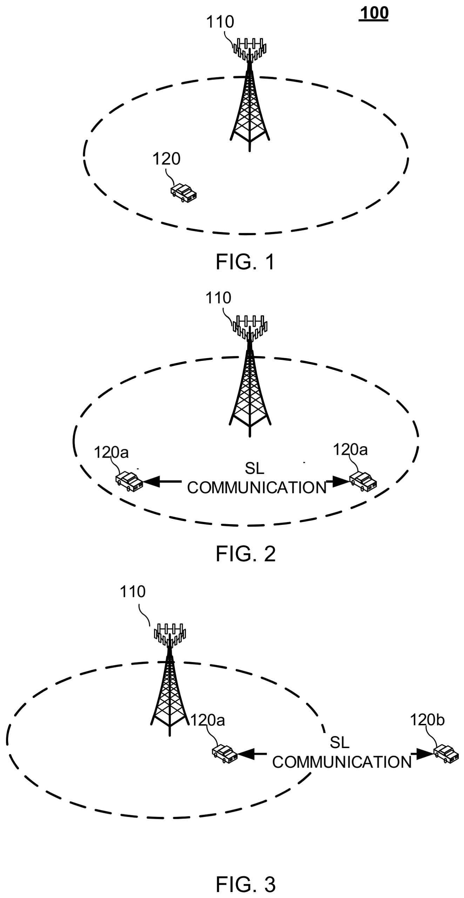

FIG. 1 is an exemplary system architectural diagram of a wireless communication system 100 to which embodiments of the disclosure can be applied. The wireless communication system 100 can include a network device 110 and a terminal device 120. The network device 110 can be a device for communicating with the terminal device 120. The network device 110 can provide communication coverage for a particular geographic area, and can communicate with the terminal device 120 located in the coverage area.

FIG. 1 exemplarily illustrates one network device and one terminal device. Optionally, the wireless communication system 100 can include one or more network devices 110 and/or one or more terminal devices 120. For one network device 110, the one or more terminal devices 120 can all be located in network coverage of the network device 110, or can all be located out of the network coverage of the network device 110, or some of the terminal devices can be located in the coverage of the network device 110 and the other terminal devices are located out of the network coverage of the network device 110, which is not limited in embodiments of the disclosure.

Optionally, the wireless communication system 100 can further include other network entities such as a network controller and a mobility management entity, which is not limited in embodiments of the disclosure.

It should be understood that, the technical solutions of embodiments of the disclosure can be applied to various communication systems, such as a 5th-generation (5G) system or a new radio (NR), a long-term evolution (LTE) system, an LTE frequency division duplex (FDD) system, and an LTE time division duplex (TDD) system. The technical solutions provided in the disclosure can also be applied to a future communication system, such as a 6th-generation mobile communication system, and a satellite communication system.

The terminal device in embodiments of the disclosure can also be referred to as a user equipment (UE), an access terminal, a subscriber unit, a subscriber station, a mobile station (MS), a mobile terminal (MT), a remote station, a remote terminal device, a mobile device, a user terminal, a terminal, a wireless communication device, a user agent, or a user apparatus. The terminal device in embodiments of the disclosure can refer to a device providing voice and/or data connectivity for a user, and can be used for connecting a human, an object, and a machine, for example, various devices having wireless connection functions such as a handheld device, an in-vehicle device, and the like. The terminal device in embodiments of the disclosure can be a mobile phone, a tablet computer (pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE can be used to act as a base station. For example, the UE can act as a scheduling entity for providing SL signals between UEs in vehicle-to-everything (V2X) or device-to-device (D2D), etc. For example, a cellular radio telephone and an automobile communicate with each other by using sidelink (SL) signals. A cellular radio telephone and a smart household appliance communicate with each other without relaying communication signals via a base station.

The network device in embodiments of the disclosure can be a device for communicating with the terminal device. The network device can also be referred to as an access-network device or a radio access network (RAN) device, for example, the network device can be a base station. The network device in embodiments of the disclosure can refer to a RAN node (or device) that enables a terminal device to access a wireless network. The base station can cover various names in a broad sense, or replace the following names, for example, a NodeB or an evolved NodeB (eNB), a next-generation node B (gNB), a relay node, an access point (AP), a transmission and reception point (TRP), a transmission point (TP), a master station (MeNB), a secondary station (SeNB), a multi-standard radio (MSR) node, a home base station, a network controller, an access node, a radio node, and an AP, a transmission node, a transmission and reception node, a baseband unit (BBU), a remote radio unit (RRU), an active antenna unit (AAU), a remote radio head (RRH), a central unit (CU), a distributed unit (DU), a positioning node, and the like. The base station can be a macro base station, a micro base station, a relay node, a donor node, or the like, or a combination thereof. The base station can also refer to a communication module, a modem, or a chip that is configured in the foregoing device or apparatus. The base station can also be a mobile switching center, a device functioning as a base station in D2D, V2X, and machine-to-machine (M2M) communication, a network-side device in a 6G network, a device functioning as a base station in a future communication system, etc. The base station can support networks of the same or different access technologies. There is no limitation on the specific technology and device form applied to the network device in embodiments of the disclosure.

The base station can be fixed or mobile. For example, a helicopter or unmanned aerial vehicle (UAV) can be configured to act as a mobile base station, and one or more cells can move according to the position of the mobile base station. In other examples, the helicopter or UAV can be configured to function as a device for communicating with another base station.

In some deployments, the network device in embodiments of the disclosure can refer to a CU or a DU, or the network device includes a CU and a DU. The gNB can also include an AAU.

The network device and the terminal device can be deployed on land, which includes indoor or outdoor, handheld, wearable, or in-vehicle. The network device and the terminal device can also be deployed on water. The network device and the terminal device can also be deployed on airplanes, balloons, satellites, etc. in the air. In embodiments of the disclosure, there is no limitation on the scenario in which the network device and the terminal device are located.

It should be understood that, all or some of functions of the communication device in the disclosure can also be implemented by a software function running on hardware, or can be implemented by a virtualization function instantiated on a platform (for example, a cloud platform).

## SL communication under different network coverage conditions

SL communication refers to an SL-based communication technology. SL communication can be, for example, device to device (D2D) communication or vehicle to everything (V2X) communication. Communication data in a conventional cellular system is received or transmitted between a terminal device and a network device, while SL communication supports direct transmission of communication data between terminal devices. Compared with conventional cellular communication, direct transmission of communication data between terminal devices can have higher spectrum efficiency and lower transmission delay. For example, an SL communication technology is applied to a V2X system.

With regard to SL communication, SL communication can be classified into in-coverage SL communication, partial-coverage SL communication, and out-of-coverage SL communication according to the network coverage condition of the terminal device.

FIG. 2 is an exemplary diagram illustrating a scenario of in-coverage SL communication. In the scenario illustrated in FIG. 2, two terminal devices 120a are both within the coverage of a network device 110. Therefore, the two terminal devices 120a can both receive configuration signaling (in the disclosure, the "configuration signaling" can also be replaced by "configuration information") from the network device 110, and determine SL configuration according to the configuration signaling from the network device 110. After the terminal devices 120a both complete SL configuration, SL communication can be performed on an SL.

FIG. 3 is an exemplary diagram illustrating a scenario of partial-coverage SL communication. In the scenario illustrated in FIG. 3, a terminal device 120a performs SL communication with a terminal device 120b. The terminal device 120a is located within the coverage of a network device 110, and therefore, the terminal device 120a can receive configuration signaling from the network device 110 and determine SL configuration according to the configuration signaling from the network device 110. The terminal device 120b is located out of network coverage and cannot receive the configuration signaling from the network device 110. In this case, the terminal device 120b can determine the SL configuration according to pre-configuration information and/or information carried on a physical sidelink broadcast channel (PSBCH) transmitted by the terminal device 120a located within network coverage. After the terminal device 120a and the terminal device 120b are both configured with the SL configuration, SL communication can be performed on an SL.

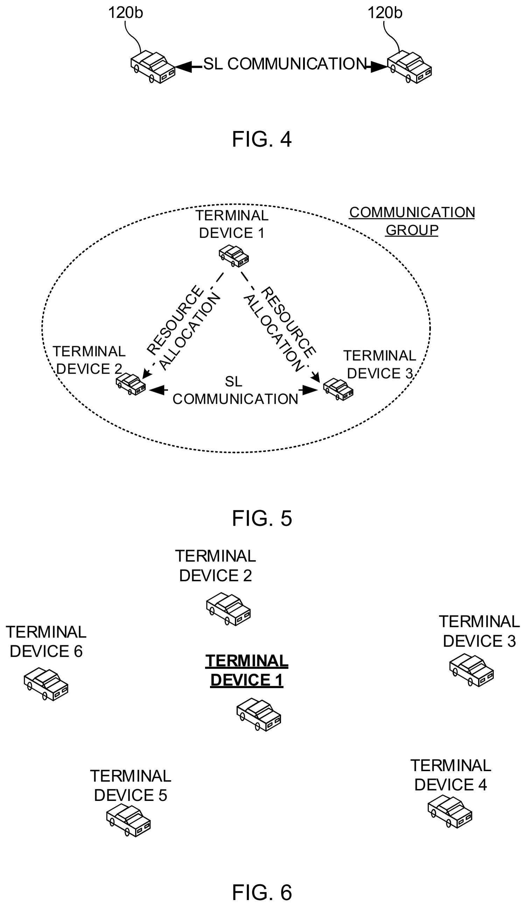

FIG. 4 is an exemplary diagram illustrating a scenario of out-of-coverage SL communication. In the scenario illustrated in FIG. 4, two terminal devices 120b are both located out of network coverage. In this case, the two terminal devices 120b can determine SL configuration according to pre-configuration information. After the two terminal devices 120b both complete SL configuration, SL communication can be performed on an SL.

## Central control node-based SL communication

FIG. 5 is an exemplary diagram illustrating a scenario of central control node-based SL communication. In such SL communication scenario, multiple terminal devices can constitute a communication group, and the communication group includes a central control node. The central control node can be a terminal device (such as terminal device 1 in FIG. 5) in the communication group, where such terminal device can also be referred to as cluster header (CH) terminal device. The central control node can be responsible for implementing one or more of the following functions: establishment of communication group, joining and leaving of group members in the communication group, resource coordination within the communication group, allocation of SL transmission resource to other terminal devices, reception of SL feedback information from other terminal devices, or resource coordination with other communication groups.

## Data transmission mode for SL communication

Some SL communication systems (such as LTE-V2X) support broadcast-based data transmission (hereinafter, "broadcast transmission" for short). For broadcast transmission, a receive (Rx) terminal can be any terminal device around a transmit (Tx) terminal. Taking FIG. 6 as an example, terminal device 1 is a Tx terminal, and an Rx terminal corresponding to the Tx terminal is any terminal device around terminal device 1, for example, terminal device 2 ~ terminal device 6 in FIG. 6.

In addition to broadcast transmission, some communication systems support unicast-based data transmission (hereinafter, "unicast transmission" for short) and/or groupcast-based data transmission (hereinafter, "groupcast transmission" for short). For example, NR-V2X expects to support autonomous driving. Autonomous driving has higher requirements on data exchange between vehicles. For example, data exchange between vehicles requires higher throughput, lower delay, higher reliability, larger coverage, more flexible resource allocation modes, and the like. Therefore, in order to improve data exchange performance between vehicles, unicast transmission and groupcast transmission are introduced in NR-V2X.

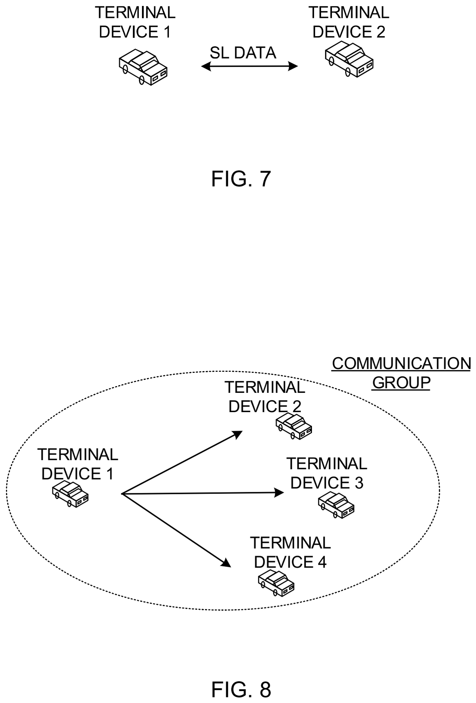

For unicast transmission, the Rx terminal generally includes only one terminal device. Taking FIG. 7 as an example, transmission performed between terminal device 1 and terminal device 2 is unicast transmission. Terminal device 1 can be a Tx terminal, and terminal device 2 can be an Rx terminal. Alternatively, terminal device 1 can be an Rx terminal, and terminal device 2 can be a Tx terminal.

For groupcast transmission, the Rx terminal can be a terminal device in a communication group, or the Rx terminal can be a terminal device within a certain transmission distance. Taking FIG. 8 as an example, terminal device 1, terminal device 2, terminal device 3, and terminal device 4 constitute a communication group. If terminal device 1 performs data transmission, all the other terminal devices in the group (terminal device 2 ~ terminal device 4) can be Rx terminals.

## Slot structure for NR-V2X

Compared with an LTE-V2X system, an NR-V2X system has lower delay, and therefore, a multiplexing mode for a physical sidelink control channel (PSCCH) and a physical sidelink shared channel (PSSCH) in the NR-V2X system is redesigned compared with that in the LTE-V2X system. Time-domain resource allocation in NR-V2X is implemented at a granularity of slot. In one slot, the 1st orthogonal frequency division multiplexing (OFDM) symbol is fixed for automatic gain control (AGC). On an AGC symbol, a UE can duplicate information sent on the 2nd symbol. The last one symbol in the slot is reserved for Rx-Tx switching, so that the UE can switch from a Tx (or Rx) state to an Rx (or Tx) state.

In the NR-V2X system, a PSSCH and a PSCCH associated with the PSSCH are transmitted in the same slot. Except an AGC symbol, a PSCCH can occupy two or three OFDM symbols, and a time-domain position of the PSCCH can start from the 2nd time-domain symbol in time-domain symbols that can be used for SL transmission in the slot (the 1st time-domain symbol is an AGC symbol).

The number of physical resource blocks (PRBs) occupied by a PSCCH in frequency domain is configurable. For example, a PSCCH can occupy {10, 12, 15, 20, 25} PRBs in frequency domain. In frequency domain, the number of PRBs occupied by a PSCCH is within one sub-band of the PSSCH. If the number of PRBs occupied by the PSCCH is less than the size of one subchannel of the PSSCH, or a frequency-domain resource for the PSSCH includes multiple subchannels, a PSCCH can be frequency-division multiplexed (FDMed) with the PSSCH on an OFDM symbol where the PSCCH is located.

In the NR-V2X system, parameters *sl-startSLsymbols* and *sl-lengthSLsymbols* can be used for configuring a starting point and length of time-domain symbols (or "symbols" for short) used for SL transmission in one slot. The last symbol in the symbols for SL transmission in the slot configured via the parameters *sl-startSLsymbols* and *sl-lengthSLsymbols* is used as a guard period (GP), and a PSSCH and a PSCCH can only occupy the remaining time-domain symbols.

In some embodiments, in addition to a PSCCH and a PSSCH, there may also be a physical sidelink feedback channel (PSFCH) in one SL slot for NR-V2X. If a resource for PSFCH transmission is configured in the slot, a PSSCH and a PSCCH cannot occupy a symbol used for PSFCH transmission, as well as an AGC symbol preceding the symbol and a GP symbol.

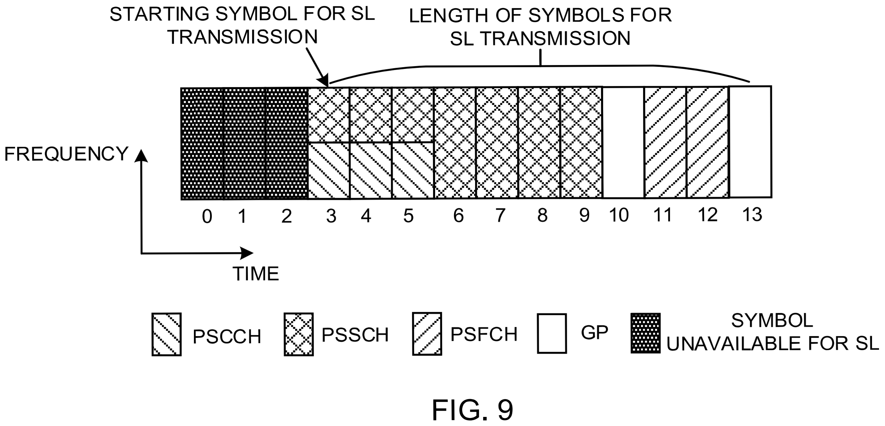

FIG. 9 is an exemplary diagram illustrating a slot structure for some SL communication systems (for example, NR-V2X system). As illustrated in FIG. 9, parameters configured by a network are that *sl-StartSymbol*=3 and *sl-LengthSymbols*=11, that is, 11 symbols starting from a symbol with an index of 3 in one slot can be used for SL transmission. There is a resource for PSFCH transmission in the slot, and a PSFCH occupies symbol 11 and symbol 12, where symbol 11 is used as an AGC symbol for the PSFCH, and symbol 10 and symbol 13 are used as GPs. Therefore, symbols that can be used for PSSCH transmission are symbol 3 to symbol 9, where a PSCCH occupies 3 time-domain symbols, i. e., the PSCCH occupies symbol 3, symbol 4, and symbol 5, and symbol 3 is usually used as an AGC symbol.

A PSSCH can be used for carrying 2nd-stage sidelink control information (SCI) and an SL shared channel (SL-SCH). 2nd-stage SCI can have different SCI formats. For example, two 2nd-stage SCI formats, namely SCI format 2-A and SCI format 2-B, are defined in the 3rd-generation partnership project release 16 (3GPP R16). SCI format 2-B is applicable to groupcast communication with distance information-based SL hybrid automatic repeat request (HARQ) feedback. SCI format 2-A is applicable to other scenarios, such as unicast, groupcast, and broadcast in which no SL HARQ feedback is required, unicast communication in which SL HARQ feedback is required, and groupcast communication in which an acknowledgement (ACK) or a negative ACK (NACK) needs to be fed back. Another 2nd-stage SCI format, namely, SCI format 2-C, is introduced in 3GPP R17 to indicate a reference resource set and trigger signaling in a specific scenario.

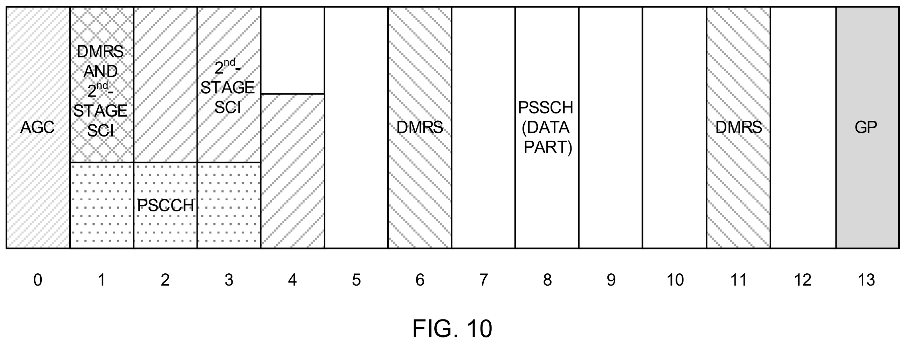

FIG. 10 is an exemplary structural diagram illustrating 2nd-stage SCI in a slot. As illustrated in FIG. 10, a modulation symbol for 2nd-stage SCI is mapped starting from a symbol where the 1st PSSCH demodulation reference signal (DMRS) is located in an order of firstly frequency domain and then time domain, and is multiplexed with a resource element (RE) for a DMRS on the symbol through interleaving. In addition, the modulation symbol for the 2nd-stage SCI cannot be mapped to an RE where a phase tracking-reference signal (PT-RS) is located.

In an SL communication system, no matter whether a UE performs resource selection autonomously or determines a transmission resource based on SL resource scheduling from the network, different UEs may send PSCCHs on the same time-frequency resource. In order to ensure that an Rx end can at least successfully detect one PSCCH in the case of resource conflict between PSCCHs, a scheme for PSCCH DMRS randomization is adopted in LTE-V2X.

Specifically, when sending a PSCCH, the UE can select one value randomly from {0, 3, 6, 9} as a cyclic shift for a DMRS, and if PSCCH DMRSs sent by multiple UEs on the same time-frequency resource apply different cyclic shifts, the Rx UE can still successfully detect at least one PSCCH via an orthogonal DMRS. For the same purpose, in NR-V2X, three PSCCH DMRS frequency-domain orthogonal cover codes (OCCs) are introduced for random selection by a Tx UE, as illustrated in Table 1, where the $i$th bit in an OCC is applied to the $i$th DMRS RE in an RB, thereby distinguishing different UEs.

Table 1

| OCC index | OCC | | |
|---|---|---|---|
| | $i=0$ | $i=1$ | $i=2$ |
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

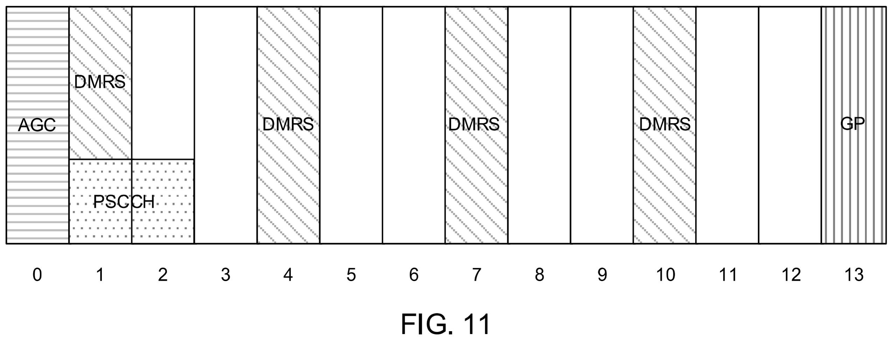

The design of a PSSCH DMRS in some SL communication systems (such as NR-V2X system) draws inspiration from the design of an NR UE-universal mobile telecommunication system terrestrial radio access network (UE-UTRAN, Uu) interface, in which multiple time-domain PSSCH DMRS patterns are applied. In a resource pool, the number of available DMRS patterns is related to the number of PSSCH symbols in the resource pool. For a specific number of PSSCH symbols (including the 1st AGC symbol) and a specific number of PSCCH symbols, an available DMRS pattern(s) and a position of each DMRS symbol in the pattern are illustrated in Table 2. FIG. 11 is a schematic diagram illustrating time-domain positions of four DMRS symbols in one slot when the number of PSSCH symbols is 13.

Table 2

| Number of PSSCH symbols (including the 1st AGC symbol) | Position of DMRS symbol (relative to position of the 1st AGC symbol) | | | | | |
|---|---|---|---|---|---|---|
| | Number of PSCCH symbols is 2 | | | Number of PSCCH symbols is 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

In some embodiments, if multiple time-domain DMRS patterns are configured for a resource pool, then a time-domain DMRS pattern to be applied can be selected by a Tx UE and indicated in 1st-stage SCI. With such design, a UE moving at high speed can select a high-density DMRS pattern, thereby ensuring accuracy of channel estimation. For a UE moving at low speed, a low-density DMRS pattern can be applied, thereby improving spectral efficiency.

The method for generating a PSSCH DMRS sequence is almost the same as the method for generating a PSCCH DMRS sequence, the difference lies only in that in an initialization formula $c_{init}$ for a pseudo-random sequence $c(m)$, $N_{ID} = \sum_{i=0}^{L-1} p_i \cdot 2^{L-1-i}$, where $p_i$ is the $i$th bit in a cyclic redundancy check (CRC) for a PSCCH scheduling the PSSCH, and $L$ is the number bits in the CRC for the PSCCH, for example, $L=24$.

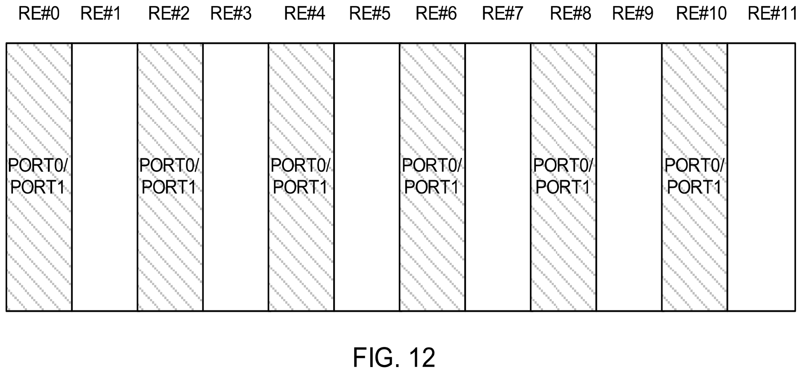

In an NR communication system, a PDSCH and a PUSCH each support two frequency-domain DMRS patterns, i. e. DMRS frequency-domain type 1 and DMRS frequency-domain type 2. For each frequency-domain type, there are two different types, i. e. single-symbol DMRS and double-symbol DMRS. Single-symbol DMRS frequency-domain type 1 supports four DMRS ports, and single-symbol DMRS frequency-domain type 2 supports six DMRS ports. In the case of double-symbol DMRS, the number of ports supported is doubled. However, in an SL communication system (e. g., NR-V2X), since at most two DMRS ports needs to be supported by a PSSCH, only single-symbol DMRS frequency-domain type 1 needs to be supported. FIG. 12 is an exemplary diagram illustrating single-symbol DMRS frequency-domain type 1.

**Determination of frequency-domain resource in NR-V2X**

Similar to LTE-V2X, frequency-domain resources in an NR-V2X resource pool can be consecutive, and the granularity of frequency-domain resource allocation can be subchannel. Generally, the number of PRBs in one subchannel is {10, 12, 15,20,50,75, 100}, where the minimum subchannel size is 10 PRBs, which is much larger than the minimum subchannel size of 4 PRBs in LTE-V2X. This is mainly because a frequency-domain resource for a PSCCH in NR-V2X is located within the 1st subchannel of a PSSCH associated with the PSCCH, and the frequency-domain resource for the PSCCH is smaller than or equal to the size of one subchannel of the PSSCH. A time-domain resource for the PSCCH occupies two or three OFDM symbols. If the subchannel size is configured to be small, there will be fewer available resources for the PSCCH, which increases bit error rate, thus degrading detection performance of the PSCCH. In NR-V2X, the size of the subchannel of the PSSCH is configured separately from the size of the frequency-domain resource for the PSCCH, and typically, the frequency-domain resource for the PSCCH is smaller than or equal to the size of the subchannel of the PSSCH.

In some implementations, the following configuration parameters in NR-V2X resource pool configuration information are used for determining frequency-domain resources in a PSCCH and PSSCH resource pool: a subchannel size (*sl-SubchannelSize*), the number of subchannels (*sl-NumSubchannel*), an index of a start RB of a subchannel (*sl-StartRB-Subchannel*), the number of PRBs (*sl-RB-Number*), and a PSCCH frequency-domain resource indicator (*sl-FreqResourcePSCCH*). The subchannel size can indicate the number of contiguous PRBs in one subchannel in a resource pool, and the value range can be {10, 12, 15, 20, 50, 75, 100} PRBs. The number of subchannels can indicate the number of subchannels in a resource pool. The index of the start RB of a subchannel can indicate an index of a start PRB of the 1st subchannel in the resource pool. The number of PRBs can indicate the number of contiguous PRBs in the resource pool. The PSCCH frequency-domain resource indicator can indicate the size of a frequency-domain resource for a PSCCH, and the value range is usually {10, 12, 15, 20, 25} PRBs.

In some implementations, when the terminal device determines a resource pool used for PSSCH transmission or PSSCH reception, a frequency-domain resource in the resource pool can be *sl-NumSubchannel* contiguous subchannels starting from a PRB indicated by *sl-StartRB-Subchannel.* If the number of PRBs in the *sl-NumSubchannel* contiguous subchannels is less than the number of PRBs indicated by *sl-RB-Number,* the remaining PRBs cannot be used for PSSCH transmission or PSSCH reception.

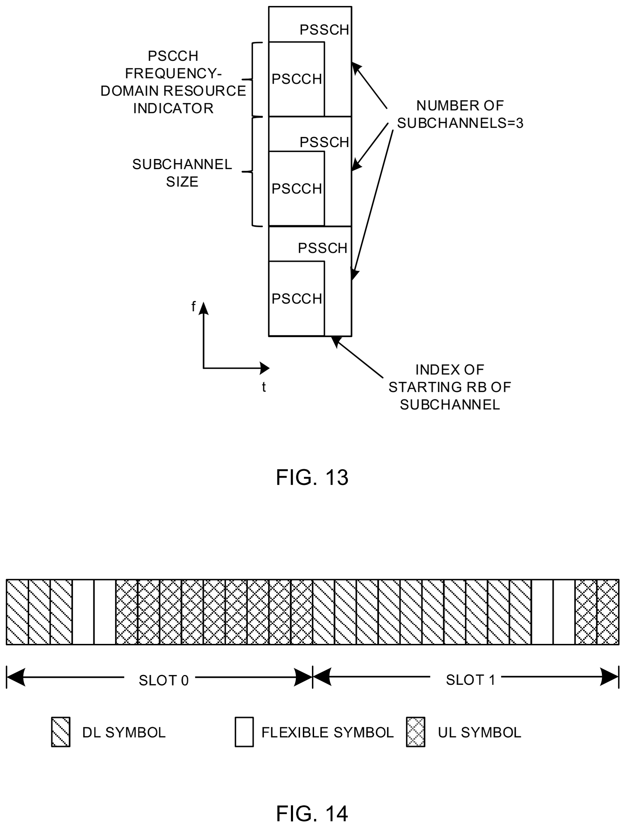

In NR-V2X, a frequency-domain starting position of a PSCCH can be aligned with a frequency-domain starting position of the 1st subchannel of a PSSCH associated with the PSCCH, and therefore, a starting position of each PSSCH subchannel is a possible frequency-domain starting position of the PSCCH. A frequency-domain range of a PSCCH and PSSCH resource pool can be determined according to the above parameters. FIG. 13 is a schematic diagram illustrating a PSCCH and PSSCH resource pool.

Generally, a PSCCH is used for carrying SCI related to resource sensing. In some implementations, information carried on a PSCCH can include one or more of: priority of scheduled transmission, frequency-domain resource assignment, time-domain resource assignment, a reference signal pattern for a PSSCH, a 2nd-stage SCI format, a code-rate offset for 2nd-stage SCI, the number of PSSCH DMRS ports, a modulation and coding scheme (MCS), an MCS table indicator, the number of PSFCH symbols, a resource reservation period, a reserved bit, etc. The frequency-domain resource assignment indicates the number of frequency-domain resources for a PSSCH scheduled by a PSCCH in a current slot, and the number of frequency-domain resources and a starting position of at most two reserved retransmission resources. The time-domain resource assignment indicates a time-domain position(s) of at most two retransmission resources. The resource reservation period is used for reserving resources used for transmission of another transport block (TB) in the next period, and in general, this information bit field does not exist if cross-TB resource reservation is not enabled in a resource pool configuration. The reserved bit usually includes 2~4 bits, and the specific number of bits can be configured by the network or pre-configured.

Since a PSCCH and a scheduled PSSCH are transmitted in one slot, and a starting position of a PRB(s) occupied by the PSCCH can be a starting position of the 1st subchannel of the scheduled PSSCH, a time-frequency starting position of the scheduled PSSCH is not explicitly indicated by the PSCCH (i. e. SCI format 1-A).

**Determination of time-domain resource (slot) in NR-V2X**

In NR-V2X, PSCCH/PSSCH transmission is generally at a slot level, i. e. only one PSCCH/PSSCH can be transmitted in each slot, and transmission of multiple PSCCHs/PSSCHs within one slot through time-division multiplexing (TDM) is not supported. However, PSCCHs/PSSCHs of different users can be multiplexed within one slot through FDM.

A time-domain resource for a PSSCH in NR-V2X can be at a granularity of slot. Unlike a PSSCH in LTE-V2X that occupies all time-domain symbols in one subframe, a PSSCH in NR-V2X can occupy only some symbols in one slot. This is mainly because in an LTE system, UL or DL transmission is performed at a granularity of subframe, and therefore, SL transmission is also performed at a granularity of subframe (a special subframe in a TDD system is not used for SL transmission). However, in an NR system, a flexible slot structure is adopted, that is, a slot includes both an UL symbol and a DL symbol, which is more conducive to flexible scheduling and reducing delay.

FIG. 14 is a schematic diagram illustrating a slot structure for an NR system. Referring to FIG. 14, a slot can include a DL symbol, an UL symbol, and a flexible symbol. The DL symbol can be located at a starting position of the slot, the UL symbol can be located at an ending position of the slot, and the flexible symbol is located between the DL symbol and the UL symbol. In addition, the number of each type of symbols in each slot is configurable.

At present, an SL transmission system can share a carrier with a cellular system, and in this case, only an UL transmission resource for the cellular system can be used for SL transmission. With regard to NR-V2X, if SL transmission still needs to occupy all time-domain symbols in one slot, a network needs to configure a full-UL slot for SL transmission, which will have great influence on UL and DL data transmission in an NR system, thus reducing system performance. Therefore, NR-V2X supports using only some time-domain symbols in a slot for SL transmission, i. e., some UL symbols in one slot are used for SL transmission. In addition, considering that an AGC symbol and a GP symbol are included in SL transmission, if the number of UL symbols used for SL transmission is small, there will be fewer remaining symbols available for transmitting valid data after the AGC symbol and the GP symbol are excluded, which results in low resource utilization. Therefore, the number of time-domain symbols occupied by SL transmission in NR-V2X is at least 7 (including a GP symbol). When a dedicated carrier is adopted in an SL transmission system, it can avoid sharing a transmission resource with other systems, and all symbols in a slot can be configured for SL transmission.

In NR-V2X, a starting point and a length of time-domain symbols for SL transmission in one slot can be configured via a starting symbol position (*sl-StartSymbol*) and the number of symbols (*sl-LengthSymbols*). The last symbol in the time-domain symbols for SL transmission is used as a GP, and only the rest of the time-domain symbols can be used for a PSSCH and a PSCCH. However, if a resource for PSFCH transmission is configured in the slot, a PSSCH and a PSCCH cannot occupy a time-domain symbol(s) used for PSFCH transmission, as well as an AGC symbol preceding the symbol and a GP symbol.

In an NR-V2X system, time-domain resources in a resource pool are indicated via a bitmap. Considering a flexible slot structure in an NR system, the length of a bitmap is extended, and the range of the length of a bitmap supported is [10:160]. The manner for determining a position of a slot belonging to the resource pool within one system frame number (SFN) cycle via a bitmap is the same as that in LTE-V2X, and the difference lies in the following two aspects.

Firstly, the total number of slots in one SFN cycle is $10240 \times 2^{\mu}$, where parameter $\mu$ is related to subcarrier spacing.

Secondly, if at least one time-domain symbol in time-domain symbols $Y, Y + 1, Y + 2, ..., Y + X - 1$ in one slot is not configured as an UL symbol via *TDD-UL-DL-ConfigCommon* signaling from the network device, the slot cannot be used for SL transmission, where $Y$ denotes *sl-StartSymbol* and $X$ denotes *sl-LengthSymbols.*

The manner for determining the position of the slot belonging to the resource pool within one SFN cycle can include Step 1 to Step 5 below.

Step 1, a slot that does not belong to the resource pool within the SFN cycle is excluded, where the slot that does not belong to the resource pool can include a synchronization slot and a slot that cannot be used for SL transmission. The remaining slots are represented as a remaining slot set, which are re-numbered as $(l_0, l_1, \cdots, l_{(10240 \times 2^{\mu} - N_{S\_SSB} - N_{nonSL} - 1)})$.

$N_{S\_SSB}$ represents the number of synchronization slots in one SFN cycle. The synchronization slot is determined according to a synchronization-related configuration parameter, and is related to a synchronization signal block (SSB) transmission periodicity, the number of SSB transmission resources configured within the periodicity, etc.

$N_{nonSL}$ represents the number of slots in one SFN cycle which do not satisfy configuration of a starting point and the number of UL symbols. If at least one time-domain symbol in time-domain symbols $Y, Y + 1, Y + 2, ..., Y + X - 1$ in one slot is not semi-statically configured as an UL symbol, the slot cannot be used for SL transmission, where $Y$ denotes *sl-StartSymbol* and $X$ denotes *sl-LengthSymbols.*

Step 2, the number of reserved slots and corresponding time-domain positions are determined.

If the number of the slots in the remaining slot set cannot be evenly divided by the length of a bitmap, the number of reserved slots and the corresponding time-domain positions need to be determined. In some implementations, if a slot $l_r$ (0 $\leq$ r < $10240 \times 2^{\mu}$ -$N_{S\_SSB}$ - $N_{nonSL}$) satisfies $r = \left\lfloor \frac{m \cdot (10240 \times 2^{\mu} - N_{S\_SSB} - N_{nonSL})}{N_{reserved}} \right\rfloor$ , the slot is a reserved slot.

$N_{reserved}$ = ($10240 \times 2^{\mu}$ - $N_{S\_SSB}$ - $N_{nonSL}$) *mod* $L_{bitmap}$, which represents the number of reserved slots, where $L_{bitmap}$ represents the length of the bitmap. $m = 0,...,N_{reserved}$ - 1.

Step 3, the reserved slot(s) is excluded from the remaining slot set, and the remaining slots are represented as a logical slot set.

Slots in the foregoing slot set are all slots available for the resource pool, and slots in the logical slot set are re-numbered as $\left(t_0^{SL}, t_1^{SL}, \ldots, t_{T_{max}-1}^{SL}\right)$, where $T_{max}$ = 10240 $\times$ 2$^\mu$ -$N_{S\_SSB}$ - $N_{nonSL}$ - $N_{reserved}$.

Step 4, a slot belonging to the resource pool in the logical slot set is determined according to the bitmap.

The bitmap in resource-pool configuration information is $(b_0, b_1, \ldots, b_{L_{bitmap}-1})$. For a slot

$$t_k^{SL}\left(0 \leq k < \left(10240 \times 2^\mu - N_{S\_SSB} - N_{nonSL} - N_{reserved}\right)\right)$$ in the logical slot set, if $b_{k'}$ = 1 is satisfied, the slot is a slot belonging to the resource pool, where $k'$ = $k \bmod L_{bitmap}$.

Step 5, the slots belonging to the resource pool determined in Step 4 are re-numbered sequentially as $t_i'^{SL}$, $i \in \{0, 1, \ldots, T'_{max}$ - 1}, where $T'_{max}$ represents the number of slots in the resource pool.

## DL-based positioning

In DL-based positioning, a parameter configuration for a DL positioning reference signal (PRS) can include 4 layers of configuration, which, from high to low, are a positioning frequency layer, a transmission-reception point (TRP) layer, a PRS resource set, and a PRS resource respectively. The parameter configuration for a DL PRS will be introduced in detail below.

The network device can configure for the terminal device a DL PRS configuration including four positioning frequency layers, where a parameter structure of each positioning frequency layer includes the following configuration parameters for a DL PRS: a subcarrier spacing for the DL PRS, a cyclic prefix (CP) length for the DL PRS, a frequency-domain resource bandwidth for the DL PRS, a frequency-domain starting position of a DL PRS resource, a frequency-domain reference point "point A" for the DL PRS, and a comb size "comb-$N$" for the DL PRS.

The value of the frequency-domain resource bandwidth for the DL PRS can be the number of PRBs allocated to the DL PRS. In some cases, the minimum value of the frequency-domain resource bandwidth for the DL PRS can be 24 PRBs, and the granularity can be 4 PRBs. The maximum value of the frequency-domain resource bandwidth for the DL PRS can be 272 PRBs.

The frequency-domain starting position of the DL PRS resource indicates an index of a starting PRB of frequency-domain resources allocated to the DL PRS. The index of a PRB is defined with respect to the frequency-domain reference point *"PointA"* for the DL PRS.

For each positioning frequency layer, the above DL PRS configuration parameters corresponding thereto can be applied to all DL PRS resources in the positioning frequency layer. That is, for each positioning frequency layer, all DL PRSs from multiple different TRPs can be sent on the same frequency sub-band by using the same subcarrier spacing, the same CP length, and the same comb size, and can occupy the same bandwidth. With such design, it is possible to support the terminal device to receive and measure simultaneously DL PRSs from multiple different TRPs on the same frequency.

In some scenarios, a parameter(s) for the TRP layer can include an identity (ID) parameter for uniquely identifying and positioning a TRP, such as a physical cell ID of the TRP, an NR cell global identity (NCGI) of the TRP, an absolute radio frequency channel number (ARFCN) of the TRP, and the like. Generally, each TRP layer can be configured with up to two DL PRS resource sets.

For each DL PRS resource set, a configuration parameter for the DL PRS resource set can be applied to all DL PRS resources in the DL PRS resource set. The configuration parameter for the DL PRS resource set includes one or more of: a DL PRS resource set ID (represented by *"nr-DL-PRS-ResourceSetID"*), a DL PRS transmission periodicity and slot offset (represented by *"dl-PRS-Periodicity-and-ResourceSetSlotOffset"*), a DL PRS resource repetition factor (represented by *"dl-PRS-ResourceRepetitionFactor"*), a time gap between repetitions of a DL PRS resource (represented by *"dl-PRS-ResourceTimeGap"*), a DL PRS muting option, or the number of OFDM symbols occupied by the DL PRS resource (represented by *"dl-PRS-NumSymbols"*).

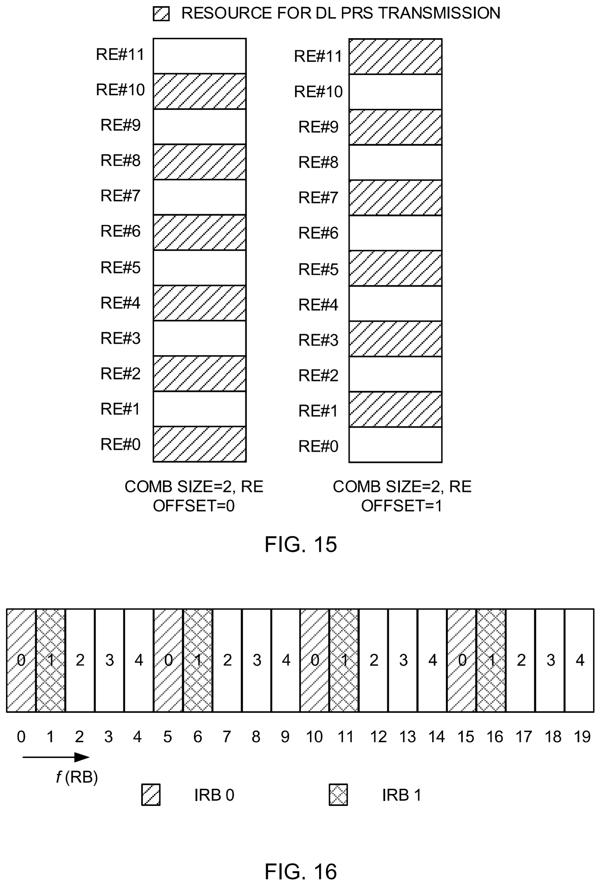

The DL PRS transmission periodicity and slot offset indicates time-domain transmission behaviors for all DL PRS resources in a DL PRS resource set. In some implementations, the minimum configurable DL PRS transmission periodicity is 4 milliseconds (ms), and the maximum configurable DL PRS transmission periodicity is 10240 ms. At present, the DL PRS configuration supports flexible subcarrier spacing including 15 kilohertz (KHz), 30 KHz, 60 KHz, and 120 KHz. For different subcarrier spacings, the value ranges of the configurable DL PRS transmission periodicity can be the same. FIG. 15 is a schematic diagram illustrating resources for DL PRS transmission with comb size = 2 and RE offset = 0 and 1.

The DL PRS resource repetition factor indicates the number of repetitions of a DL PRS resource in each DL PRS transmission periodicity. At present, through repetitions of the same DL PRS resource, the terminal device can achieve energy accumulation of DL PRS from multiple transmissions, which helps to increase the coverage range of a DL PRS and improve positioning accuracy. In a frequency range 2 (FR2) system, through repetitions of a DL PRS resource, the terminal device can perform Rx beam scanning. The terminal device can use different Rx beams to receive repetitions of the same DL PRS resource, thereby finding an optimal TRP Tx beam to match the Rx beam of the terminal device. On the other hand, repetitions of a DL PRS resource will cause increase in transmission overhead of a DL PRS. Currently, in order to control transmission overhead, in the 3GPP R16 NR specification, the DL PRS resource repetition factor has a value of 1, 2, 4, 6, 8, 16, or 32.

The time gap between repetitions of the DL PRS resource indicates the number of slots between two consecutive repetitions of the same DL PRS resource.

The DL PRS muting option indicates that a DL PRS is not to be transmitted on some time-frequency resources allocated. The muting option can be mean that a DL PRS is not transmitted on all time-frequency resources allocated, but is intentionally omitted on certain designated/specified time-frequency resources. On one hand, with a muting option, it is possible to avoid collision between a DL PRS and other signals (such as SSB). On the other hand, with a muting option, it is possible to avoid interference between signals sent from different TRPs. For example, with a muting option, it is possible to indicate to a TRP closer to the terminal device not to transmit a DL PRS, and configure a TRP farther away from the terminal device to transmit a DL PRS. In this way, the terminal device can receive a DL PRS from a farther TRP without interference from a TRP that is indicated as muted.

The number of OFDM symbols occupied by the DL PRS resource indicates the number of OFDM symbols allocated to the DL PRS resource in one slot.

Generally, a DL PRS configuration parameter in the parameter for a TRP layer can be applied to all DL PRS resources in a DL PRS resource set corresponding to the TRP layer. Therefore, DL PRSs will be transmitted on DL PRS resources belonging to the same DL PRS resource set with the same transmission periodicity and the same number of repetitions, and occupy the same number of OFDM symbols.

In some implementations, for each DL PRS resource, the DL PRS configuration parameter can further include: a DL PRS resource ID (denoted by *"nr-DL-PRS-ResourceID"*), a DL PRS sequence ID (represented by *"dl-PRS-SequenceID"*), a DL PRS starting RE offset in frequency domain (represented by *"dl-PRS-CombSizeN-AndReOffset"*), a DL PRS resource slot offset (represented by *"dl-PRS-ResourceSlotOffset"*), a DL PRS OFDM symbol offset (represented by *"dl-PRS-ResourceSymbolOffset"*), and DL PRS quasi co-location (QCL) information (represented by *"dl-PRS-QCL-Info"*).

The DL PRS starting RE offset in frequency domain indicates an RE offset in frequency domain for resource mapping of a DL PRS resource on the 1st allocated OFDM symbol in one slot. In general, the terminal device can determine an RE offset value in frequency domain for resource mapping on each OFDM symbol based on the parameter and a relative offset value defined in technical specification (TS) 38.211.

The DL PRS resource slot offset indicates a slot offset with respect to a DL PRS resource set. This parameter can be used for determining a slot position of each DL PRS resource.

The DL PRS OFDM symbol offset indicates a time-frequency position of a DL PRS resource within one slot. This parameter can indicate an index of a starting OFDM symbol within the slot.

The DL PRS QCL information indicates QCL information of a DL PRS.

### Sidelink over unlicensed spectrum (SL-U)

When performing SL transmission over an unlicensed spectrum, SL transmission needs to meet specific regulation requirements, including requirements on minimum occupied channel bandwidth (OCB) and maximum power spectral density (PSD). With regard to requirements on OCB, if a UE uses a channel to perform data transmission, the bandwidth of the channel occupied is not less than 80% of the bandwidth of one channel. With regard to requirements on maximum PSD, a power transmitted by the UE at every 1 megahertz (MHz) cannot exceed 10 decibel-milliwatts (dBm). In order to meet the regulation requirements on OCB and PSD, an interlaced resource block (IRB) structure is employed when performing SL transmission over an unlicensed spectrum. Each IRB consists of N RBs that are discrete in frequency domain, there are totally M RBs in a frequency-band range, and RBs in the $m^{th}$ IRB are $\{m, M+m, 2M+m, 3M+m, ...\}$.

FIG. 16 is a schematic structural diagram illustrating IRBs. As illustrated in FIG. 16, a system bandwidth includes 20 RBs, which include 5 IRBs (i. e. $M$=5), where each IRB consists of 4 RBs (i. e. $N$=4), and frequency spacings between two adjacent RBs belonging to the same IRB are the same, i. e. 5 RBs. Numbers in boxes in the figure represent IRB indexes.

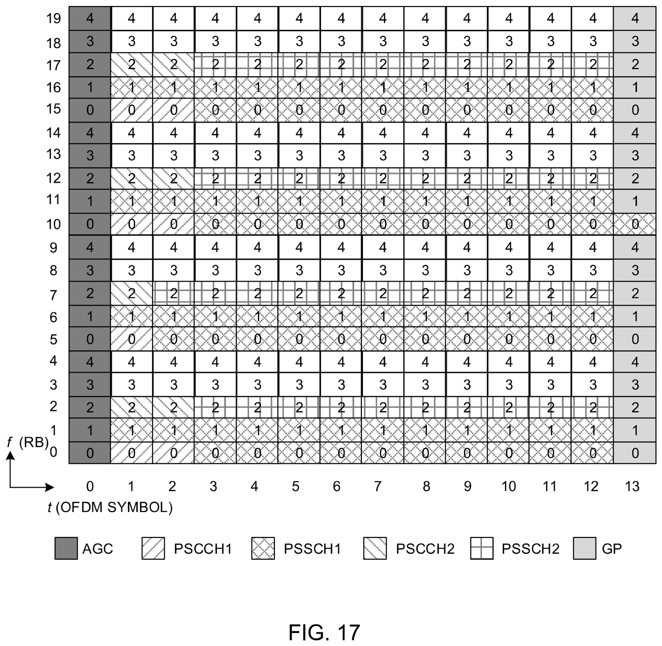

In an SL-U system, if an IRB-based resource allocation granularity is adopted, a PSCCH, a PSSCH, and other channels in the SL-U system should all be based on an IRB structure. FIG. 17 is an exemplary diagram illustrating a frame structure for an SL-U system, where the frame structure illustrated in FIG. 17 is a frame structure in which there is PSCCH and PSSCH without PSFCH in a slot. As illustrated in FIG. 17, a bandwidth includes 20 RBs, in which 5 IRB resources are configured, i. e. $M$ = 5, where each IRB resource consists of 4 RBs, and numbers in boxes represent IRB indexes. In FIG. 17, the system configures that a PSCCH occupies 1 IRB resource, and occupies 2 OFDM symbols in time domain, PSSCH occupies resources at a granularity of IRB, the 1st symbol in the slot is an AGC symbol, and the last symbol in the slot is a GP symbol. In FIG. 17, PSSCH 1 occupies IRB#0 and IRB#1, and PSCCH 1 corresponding to PSSCH 1 occupies IRB#0.

PSSCH 2 occupies IRB#2, and PSCCH 2 corresponding to PSSCH 2 also occupies IRB#2. It should be noted that, for the sake of simplicity, a resource occupied by 2nd-stage SCI, a resource occupied by a PSCCH DMRS, and a resource occupied by a PSSCH DMRS are not illustrated in FIG. 17.

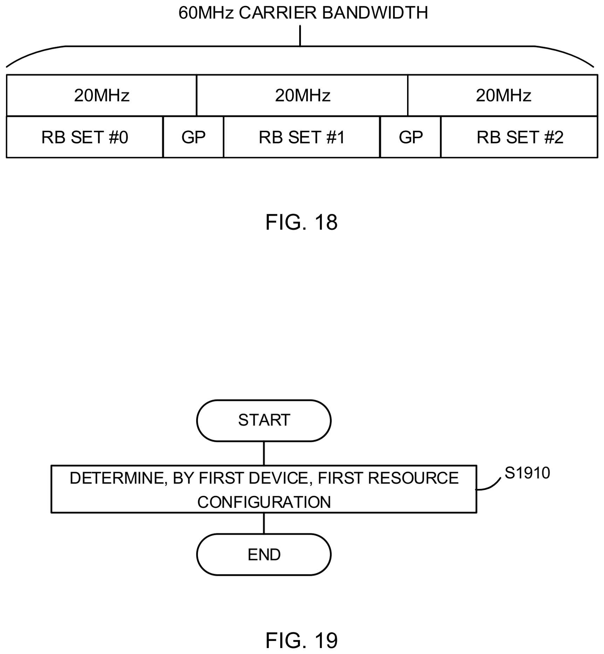

On an unlicensed spectrum, the UE can access a channel through listen before talk (LBT). For LBT, the granularity is 20MHz in frequency domain, and each 20MHz can be referred to as one RB set. One carrier can include multiple RB sets with a GP between RB sets, as illustrated in FIG. 18.

On an unlicensed spectrum, the UE firstly needs to perform LBT, and can access a channel only after LBT succeeds, but the time at which the UE completes LBT is not fixed. In some implementations, if there is a restriction that the UE can only perform transmission from a starting position of a slot, the UE may miss transmission opportunity due to failure to complete LBT before the starting position. Therefore, in SL-U, it is considered to add one transmission starting point in a slot, that is, multi-starting point transmission, for example, the additional starting point can be the 3rd or 4th OFDM symbol in the slot.

## SL-based positioning

In 3GPP R17, 3GPP RAN has conducted research on SL-based positioning, for example, "NR positioning enhancement" and "scenarios and requirements of in-coverage, partial-coverage, and out-of-coverage NR positioning cases". Research on "scenarios and requirements of in-coverage, partial-coverage, and out-of-coverage NR positioning cases" focuses on V2X and public security cases. In addition, some organizations (for example, the 3GPP SA1 working group) have also made requirements on "distance measurement-based service", and made requirements on positioning accuracy with regard to use of internet of things (IoT) in an out-of-coverage scenario. 3GPP needs to conduct research and development on solutions to SL-based positioning, to support cases, scenarios, and requirements determined in these activities.

In order to improve positioning accuracy, and particularly, to realize positioning of a UE located outside the coverage of a cellular network, 3GPP has completed research on feasibility and performance of SL PRS-based positioning technology in an early stage of R18. Next, a solution to SL-based positioning (including distance measurement/direction measurement) in an NR system will be standardized. The solution to SL-based positioning mainly includes standardization works in the following aspects.

Standardization work 1: an SL PRS is standardized. The SL PRS can apply a comb-based (not precluding full-RE mapping pattern) frequency-domain structure, and apply a pseudo-random sequence-based sequence format. The SL PRS can be designed by using an existing DL-PRS sequence as a starting point, and can support an SL PRS bandwidth of up to 100 MHz in FR1.

Standardization work 2: a measurement for SL-based positioning is standardized, for example, measurements for supporting an SL round trip time (RTT)-based positioning method, an SL angle of arrival (AOA)-based positioning method, and an SL time difference of arrival (TDOA)-based positioning method are standardized.

Standardization work 3: an SL PRS resource allocation scheme is standardized. For example, the SL PRS resource allocation scheme includes resource allocation scheme 1 and scheme 2, where scheme 1 corresponds to SL PRS resource allocation by a network, and scheme 2 corresponds to autonomous SL PRS resource selection by a UE. In some implementations, the system supports both a shared resource pool between an SL PRS and Rel-16/17/18 SL communication and a resource pool dedicated for an SL PRS. In some implementations, for scheme 2, one or more of the following needs to be studied and standardized: channel sensing-based resource selection, random resource selection, congestion control, or inter-UE coordination-based resource selection.

Standardization work 4: an open-loop power control mechanism for SL PRS transmission is standardized.

As described above, after SL-based positioning is introduced, the communication system may support a shared resource pool between an SL PRS resource and a resource for other SL information. In this case, how a terminal device and a positioning-related entity (such as positioning server) determine an SL PRS resource is a problem to be solved.

With regard to the above problems, embodiments of the disclosure provide a wireless communication method and a communication device, where a first device determines a related configuration (i. e. a first resource configuration described below) for configuring an SL PRS resource(s) in a resource pool, so that the first device can select a suitable SL PRS resource from the resource pool according to the first resource configuration, thereby implementing SL PRS transmission and reception.

In some embodiments, the resource pool described above includes a shared resource pool between SL communications. The shared resource pool between SL communications can mean that the resource pool includes an SL PRS resource(s) and a resource(s) for sending SL information (e. g., an SL channel and/or SL data) other than an SL PRS. For example, the resource pool can include an SL PRS resource, a PSSCH resource, and the like.

In some embodiments, the resource pool can be a resource pool in which there is FDM. In this case, if an SL PRS is sent on other frequency-domain resources in the resource pool, reception of SL information sent on said other frequency-domain resources may be affected. Therefore, in some embodiments, a resource pool for SL PRS transmission can occupy the whole SL bandwidth part (BWP). In other words, the resource pool can be a resource pool occupying one SL BWP.

The application scenario of technical solutions is not limited in the disclosure. In some embodiments, the technical solutions of the disclosure can be applied to a licensed spectrum. In some embodiments, the technical solutions of the disclosure can be applied to an unlicensed spectrum.

For ease of understanding, an SL SRS resource will be briefly introduced below.

In embodiments of the disclosure, an SL PRS resource can be understood as a time-frequency resource for sending an SL PRS in one time-domain unit, that is, the SL PRS resource refers to a time-frequency resource for SL PRS transmission in one time-domain unit. There is no limitation on the time-domain unit in embodiments of the disclosure. For example, the time-domain unit can be any time-domain unit in an existing communication system, such as a frame, a subframe, a slot, a symbol, and the like. Alternatively, the time-domain unit can be any time-domain unit to be introduced in a future communication system. Embodiments of the disclosure are not limited in this regard. Taking a slot as an example of the time-domain unit, the SL PRS resource can refer to a time-frequency resource for SL PRS transmission in one slot.

Each SL PRS resource can be indicated by one or more parameters, that is, each SL PRS resource can have one or more features. Exemplarily, an SL PRS resource can have one or more of the following features: an ID of the SL PRS resource, a comb size and an RE offset for an SL PRS to be sent on the SL PRS resource, a starting position of the SL PRS resource in one time-domain unit and the number of time-domain resources occupied by the SL PRS resource in the time-domain unit, or a frequency-domain position of the SL PRS resource.

Taking a slot as an example of the time-domain unit, an SL PRS resource can have at least the following features: an ID of the SL PRS resource, a comb size and an RE offset for an SL PRS to be sent on the SL PRS resource, a starting OFDM symbol of the SL PRS resource in one slot and the number of consecutive OFDM symbols occupied by the SL PRS resource in the slot, or a frequency-domain position of the SL PRS resource.

A wireless communication method provided in embodiments of the disclosure will be described below with reference to FIG. 19. FIG. 19 is a schematic flowchart of a wireless communication method provided in an embodiment of the disclosure. The method illustrated in FIG. 19 can be performed by a first device. There is no limitation on the first device in embodiments of the disclosure. The first device can be any device related to SL positioning. In some embodiments, the first device can be a terminal device for SL PRS transmission or SL PRS reception, in other words, the first device can be an SL PRS Tx terminal or an SL PRS Rx terminal. In some embodiments, the first device can be other SL positioning-related entities, for example, the first device can be a positioning server or a server terminal device (server UE), etc.

In embodiments of the disclosure, the positioning server can be used for determining location information of the terminal device, and the positioning server can be located in a core network. In some embodiments, the positioning server can also be referred to as a positioning device, a positioning device in a core network, etc. Taking an NR system as an example, the positioning server can be a location management function (LMF). Taking other communication systems as an example, the positioning server can be a location management unit (LMU), a location management center (LMC), or an evolved serving mobile location center (E-SMLC). It can be understood that, the positioning server can also be other network elements, nodes, or devices for determining the location information of the terminal device, for example, a network element or node for determining the location information of the terminal device in a future communication system. The name of the positioning server is not specifically limited in embodiments of the disclosure.

In embodiments of the disclosure, the server terminal device can be used for determining the location information of the terminal device, in other words, the server terminal device has the same function as the positioning server, and the server terminal device can realize some or all of functions of the positioning server.

The method illustrated in FIG. 19 can include step S1910. In step S1910, a first device determines a first resource configuration.

In embodiments of the disclosure, the first resource configuration can be used for configuring an SL PRS resource in a resource pool. In some embodiments, the first resource configuration can also be understood as or replaced by other terms, such as first resource configuration information or first configuration information, which is not limited in embodiments of the disclosure.

In some embodiments, the resource pool can be the foregoing shared resource pool, that is, a resource in the resource pool can be shared by an SL PRS and SL information (such as PSSCH) other than an SL PRS. In other words, the resource pool includes a SL PRS resource(s) and a resource(s) for sending other SL information.

In some embodiments, the SL PRS resource in the resource pool can be configured by a network device or pre-configured. In some embodiments, the SL PRS resource in the resource pool can be determined by an SL PRS Tx terminal and/or an SL PRS Rx terminal.

In some embodiments, the first resource configuration can be determined according to configuration information for the resource pool, where the configuration information for the resource pool can be configured by the network device or pre-configured. For example, if the SL PRS resource in the resource pool is configured by the network device or pre-configured, the first resource configuration can be determined according to the configuration information for the resource pool configured by the network device or pre-configured.

That is, the SL PRS resource in the resource pool can be configured by the network device or pre-configured, so that the SL PRS Tx terminal and/or the SL PRS Rx terminal can determine a configuration for the SL PRS resource in the resource pool according to configuration/pre-configuration signaling for the resource pool. For example, an SL PRS resource(s) in one slot in a resource pool for SL PRS transmission is configured by the network device or pre-configured, so that the SL PRS Tx terminal and/or the SL PRS Rx terminal can determine, according to the configuration/pre-configuration signaling for the resource pool, a configuration for the SL PRS resource in the slot in the resource pool. With such resource configuration, it is possible to reduce higher-layer signaling exchange between the SL PRS Tx terminal and the SL PRS Rx terminal, thereby realizing resource saving.

In some embodiments, the first resource configuration can be determined according to positioning requirement information, for example, determined according to positioning requirement information of a terminal device. For example, the SL PRS Tx terminal and the SL PRS Rx terminal can determine an SL PRS resource configuration in the resource pool via higher-layer signaling (for example, radio resource control (RRC) signaling, sidelink positioning protocol (SLPP) layer signaling, and the like). Taking a slot as an example of a time-domain unit, the SL PRS Tx terminal and the SL PRS Rx terminal can determine the SL PRS resource configuration in one slot in the resource pool via the higher-layer signaling. With such resource configuration, it is possible to realize autonomous SL PRS resource configuration by an SL positioning-related entity (such as Tx terminal, Rx terminal, positioning server, server terminal device, and the like), which can better satisfy requirements of a positioning service, for example, satisfy quality of service (QoS) requirements of the positioning service.

As an example, the SL PRS resource configuration in the resource pool (for example, an SL PRS resource configuration in one slot in the resource pool) can be determined by the SL PRS Tx terminal, and then notified to the SL PRS Rx terminal by the Tx terminal via higher-layer signaling (for example, RRC signaling, SLPP signaling, and the like). In addition, the SL PRS Tx terminal and/or the SL PRS Rx terminal can report the determined SL PRS resource configuration to the positioning server or the server terminal device, so that the positioning server or the server terminal device can determine an SL PRS resource according to the reported SL PRS resource configuration (for example, according to an SL PRS resource ID carried in the resource configuration).

As another example, the SL PRS resource configuration in the resource pool (for example, the SL PRS resource configuration in one slot in the resource pool) can be determined by the positioning server or the server terminal device, and sent to the SL PRS Tx terminal and/or the SL PRS Rx terminal by the positioning server or the server terminal device via the SLPP signaling.

In some embodiments, if there is no resource-pool configuration information configured by the network device or pre-configured, the first resource configuration can be determined according to the positioning requirement information. That is, if there is no SL PRS resource configured by the network device or pre-configured in the resource pool for SL PRS transmission, the first device can determine the first resource configuration according to the positioning requirement information of the terminal device.

In some embodiments, the first resource configuration can be determined according to identity information of an SL PRS resource, for example, the first resource configuration can be determined according to an SL PRS resource ID. As an example, there is an association between the identity information of the SL PRS resource and the first resource configuration, and the first resource configuration can be determined according to the association between the two. How to determine the first resource configuration according to the identity information of the SL PRS resource will be described in detail below, which is not be elaborated herein for the sake of brevity.

In embodiments of the disclosure, the first device can determine the first resource configuration for configuring the SL PRS resource in the resource pool, which is beneficial for the first device to select a suitable SL PRS resource from the resource pool according to the first resource configuration, thereby implementing SL PRS transmission and reception.

The first resource configuration can be applied to multiple parameters (features) for an SL PRS resource, in other words, the first resource configuration can include multiple parameters related to the SL PRS resource. The parameters in the first resource configuration are introduced below by way of examples.

In some embodiments, the first resource configuration can include one or more of: a configuration parameter for determining a time-domain starting position of the SL PRS resource, a configuration parameter indicating an ID of the SL PRS resource, a parameter indicating a comb size for an SL PRS to be sent on the SL PRS resource, a parameter indicating a frequency offset for an SL PRS to be sent on the SL PRS resource, or a parameter indicating the number of time-domain resources occupied by the SL PRS resource.

The configuration parameter for determining the time-domain starting position of the SL PRS resource can have various types, as long as the parameter can be used for determining the time-domain starting position of the SL PRS resource. Examples of the configuration parameter for determining the time-domain starting position of the SL PRS resource are given below.

In some embodiments, the configuration parameter for determining the time-domain starting position of the SL PRS resource can include a parameter indicating the time-domain starting position (or referred to as starting time-domain position) of the SL PRS resource, that is, the time-domain starting position of the SL PRS resource can be directly indicated by the parameter. As an example, the parameter can indicate a starting OFDM symbol of the SL PRS resource, but embodiments of the disclosure are not limited thereto. The time-domain starting position of the SL PRS resource may be indicated by time-domain resources (or referred to as time-domain units) other than an OFDM symbol, for example, a slot, a time-domain resource in a future communication system, and the like.

In some embodiments, the configuration parameter for determining the time-domain starting position of the SL PRS resource can include a parameter indicating the 1st time-domain resource that can be used for the SL PRS resource in one time-domain unit. That is, a possible time-domain starting position of the SL PRS resource can be indicated by a parameter. The possible time-domain starting position of the SL PRS resource can be used as the time-domain starting position of the SL PRS resource, or a time-domain resource after the possible time-domain starting position can be used as the time-domain starting position of the SL PRS resource. As an example, the parameter can indicate the 1st OFDM symbol that can be used for the SL PRS resource in one slot, but embodiments of the disclosure are not limited thereto. The possible time-domain starting position of the SL PRS resource can be indicated by time-domain resources other than an OFDM symbol, for example, a slot, a time-domain resource in a future communication system, and the like.

In some embodiments, the parameter indicating the possible time-domain starting position of the SL PRS resource (e. g., the parameter indicating the 1st time-domain resource that can be used for the SL PRS resource in one time-domain unit) can indicate the possible time-domain starting position of the SL PRS resource through a time-domain resource index (such as an OFDM symbol index). For example, the parameter can indicate an index of the 1st OFDM symbol that can be used for the SL PRS resource in one slot.

In some embodiments, the time-domain resource index described in embodiments of the disclosure is relative to the 1st time-domain resource that is configured or pre-configured to be used for SL in an SL BWP, and an index of the 1st time-domain resource that is configured or pre-configured to be used for SL in the SL BWP is 0. For example, the OFDM symbol index described in embodiments of the disclosure is relative to the 1st OFDM symbol that is configured or pre-configured to be used for SL in the SL BWP, and an index of the 1st OFDM symbol that is configured or pre-configured to be used for SL in the SL BWP is 0.

The configuration parameter for determining the time-domain starting position of the SL PRS resource are not limited to the parameters given above, and can also include other parameters, and embodiments of the disclosure are not limited in this regard. For example, the configuration parameter for determining the time-domain starting position of the SL PRS resource can include a parameter indicating the last time-domain resource that can be used for the SL PRS resource in one time-domain unit, a parameter indicating a certain time-domain resource that can be used for the SL PRS resource in one time-domain unit other than the 1st time-domain resource and the last time-domain resource, and the like. In this case, the first device can determine the time-domain starting position of the SL PRS resource according to the parameter as well as other parameters. As an example, the configuration parameter for determining the time-domain starting position of the SL PRS resource includes the parameter indicating the last time-domain resource that can be used for the SL PRS resource in one time-domain unit, and then the first device can determine the time-domain starting position of the SL PRS resource according to the parameter and a parameter indicating the number of time-domain resources occupied by the SL PRS resource.

The configuration parameter indicating the ID of the SL PRS resource can have multiple types, and embodiments of the disclosure are not limited in this regard. For example, the parameter can include a parameter indicating the ID of the SL PRS resource. Additionally or alternatively, the parameter can include a parameter indicating a starting ID of the SL PRS resource(s).

As an example, the first resource configuration can include the parameter indicating the ID of the SL PRS resource, for example, the first resource configuration includes an SL PRS resource ID. In this way, an SL PRS resource can be uniquely determined from one time-domain unit (for example, one slot) in the resource pool according to the SL PRS resource ID.

As another example, the first resource configuration can include the parameter indicating the starting ID of the SL PRS resource(s), for example, the first resource configuration includes a starting SL PRS resource ID (that is, the starting ID of the SL PRS resource(s)). In this way, according to the starting SL PRS resource ID, starting SL PRS resource IDs corresponding to multiple SL PRS resources can be determined from one time-domain unit (for example, one slot) in the resource pool. For example, the first resource configuration includes a starting SL PRS resource ID A and a comb size N for an SL PRS to be sent on the SL PRS resource. Then, for any one configuration, N SL PRS resources with different RE offsets can be determined, where IDs of the N SL PRS resources with different RE offsets are $A$, $A+1$, ..., $A+N-1$ respectively. As a specific example, it is assumed that the first resource configuration indicates that the starting SL PRS resource ID is 0 and N=4, then the first device can determine four SL PRS resources according to the configuration, where a comb size for each of the four SL PRS resources is 4, and RE offsets for the four SL PRS resources are 0~3 respectively, and accordingly, corresponding SL PRS resource IDs are 0, 1, 2, 3 respectively.

In some embodiments, the parameter indicating the frequency offset for an SL PRS to be sent on the SL PRS resource can be understood as a parameter indicating an RE offset for the SL PRS to be sent on the SL PRS resource.

In some embodiments, the parameter indicating the number of time-domain resources occupied by the SL PRS resource can mean the parameter can indicate the number of time-domain resources occupied by the SL PRS resource. For example, the parameter can indicate the number of OFDM symbols occupied by the SL PRS resource, that is, the time-domain resource(s) occupied by the SL PRS resource can include one or more OFDM symbols, and the number of the one or more OFDM symbols can be indicated by the parameter. However, embodiments of the disclosure are not limited thereto, for example, the parameter can indicate the number of slots occupied by the SL PRS resource.

In some embodiments, the parameter indicating the number of time-domain resources occupied by the SL PRS resources can indicate the number of consecutive time-domain resources occupied by the SL PRS resource. For example, the parameter can indicate that the SL PRS resource occupies $M$ time-domain resources with consecutive indexes (for example, $M$ OFDM symbols with consecutive indexes).

It should be noted that, the first resource configuration can further include a parameter besides the parameters given above, which is not limited in embodiments of the disclosure. Exemplarily, the first resource configuration can further include a parameter indicating a frequency-domain position of the SL PRS resource, and the like.

In some embodiments, the first resource configuration can be determined according to various parameters (factors). For example, the first resource configuration can be determined according to one or more parameters for a resource for transmitting SL information other than an SL PRS in the resource pool. For example, the first resource configuration can be determined according to one or more of: a second parameter, a third parameter, or a fourth parameter.

The second parameter can indicate a time-domain resource occupied by a PSSCH DMRS(s) allowed for the resource pool. In some embodiments, the time-domain resource occupied by the PSSCH DMRS cannot be used for the SL PRS resource. That is, in some embodiments, the second parameter can be used for indicating a time-domain resource that cannot be occupied by the SL PRS resource.

The third parameter can indicate the number of time-domain resources which are not used for PSFCH transmission and a GP in one time-domain unit in the resource pool. In other words, the third parameter can indicate the number of time-domain resources that can be used for PSSCH transmission and PSCCH transmission in one time-domain unit (including a time-domain resource where an AGC is located, such as an OFDM symbol where the AGC is located, in the time-domain unit) in the resource pool. In some embodiments, time-domain resources occupied by a PSFCH and the GP cannot be used for the SL PRS resource, that is, time-domain resources occupied by a PSSCH, a PSCCH, and an AGC may be used for the SL PRS resource. In other words, in some embodiments, the third parameter can be used for indicating time-domain resources that cannot be occupied by the SL PRS resource, that is, the third parameter can be used for determining which available time-domain resource(s) may be occupied by the SL PRS resource.

The fourth parameter can indicate a time-domain resource where a PSCCH is located in the resource pool. In some embodiments, the time-domain resource where the PSCCH is located cannot be used for the SL PRS resource. That is, in some embodiments, the fourth parameter can be used for indicating a time-domain resource that cannot be occupied by the SL PRS resource.

In some embodiments, different combinations of the second parameter and the third parameter correspond to different first resource configurations. In other words, SL PRS resource configuration can be performed separately for different combinations of the second parameter and the third parameter.

In some embodiments, different second parameters correspond to different first resource configurations. In other words, SL PRS resource configuration can be performed separately for different second parameters.

How to perform SL PRS resource configuration according to one or more of the foregoing parameters will be described in detail below, which is not described herein for the sake of brevity.

In some embodiments, in addition to the parameters described above, the first resource configuration can also be determined according to other parameters. For example, the first resource configuration can be determined according to a fifth parameter, where the fifth parameter can indicate a time-domain resource that can be used for PSSCH transmission in one time-domain unit in the resource pool, that is, the fifth parameter can indicate a time-domain resource where a PSSCH is located in the time-domain unit in one resource pool. In some embodiments, the time-domain resource where the PSSCH is located can be used for the SL PRS resource. That is, the fifth parameter can be used for determining which available time-domain resource may be occupied by the SL PRS resource.

As can be seen, in some embodiments, an SL PRS resource corresponding to the first resource configuration does not include one or more of: a time-domain resource occupied by a PSSCH DMRS(s) allowed for the resource pool, a time-domain resource where a PSCCH is located in the resource pool, a time-domain resource where a PSFCH is located in the resource pool, or a time-domain resource where a GP symbol is located in the resource pool.

As described above, the SL PRS resource can occupy one or more time-domain resources. In some embodiments, some of the one or more time-domain resources occupied by the SL PRS resource can be included in different SL PRS resource configurations. For example, the SL PRS resource can occupy one or more OFDM symbols, and some (at least one OFDM symbol) of the one or more OFDM symbols can be included in different SL PRS resource configurations. In this way, it is more conducive to flexible SL PRS resource configuration. In some embodiments, one time-frequency resource (such as one OFDM symbol) can be included in different SL PRS resource configurations, that is because the resource pool does not support different terminal devices to use TDMed SL PRS resources, and the same terminal device cannot use multiple TDMed SL PRS resources. Therefore, one time-frequency resource can belong to different SL PRS resource configurations.

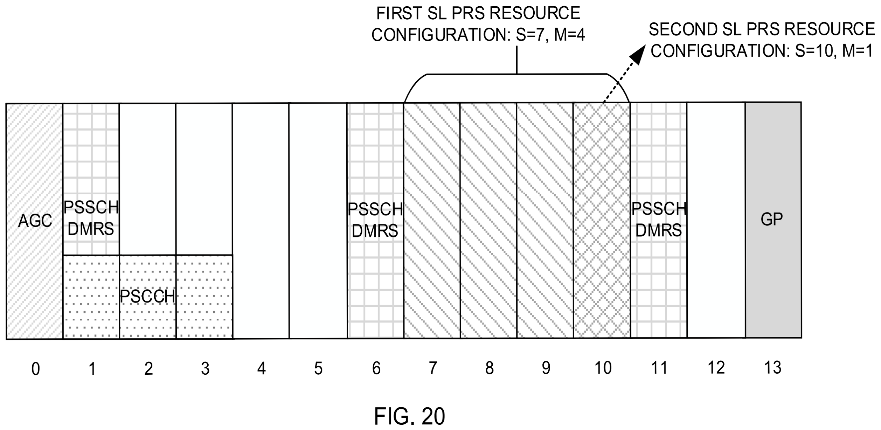

For ease of understanding, detailed elaborations will be given below with reference to FIG. 20. FIG. 20 is a schematic diagram illustrating a slot structure provided in an embodiment of the disclosure. In this example, it is assumed that the SL PRS resource configuration includes a first SL PRS resource configuration and a second SL PRS resource configuration. A parameter(s) in the first SL PRS resource configuration indicates that a starting OFDM symbol of an SL PRS resource is symbol 7, and the number of consecutive OFDM symbols occupied by the SL PRS resource is 4; and accordingly, the SL PRS resource determined according to the first SL PRS resource configuration is OFDM symbols 7~10. A parameter(s) in the second resource configuration indicates that a starting OFDM symbol of an SL PRS resource is symbol 10, and the number of consecutive OFDM symbols occupied by the SL PRS resource is 1; and accordingly, the SL PRS resource determined according to the second SL PRS resource configuration is OFDM symbol 10. In this case, as illustrated in FIG. 20, OFDM symbol 10 is included in two different SL PRS resource configurations.

As described above, the first resource configuration can differ in terms of parameter(s) included in the first resource configuration. In some embodiments, if the first resource configuration differs in terms of the parameter included in the first resource configuration, the manner for determining the first resource configuration may also be different. For example, if the first resource configuration differs in terms of the configuration parameter for determining the time-domain starting position of the SL PRS resource, the manner for determining the first resource configuration may be different, which will be described below with reference to Embodiment 1 and Embodiment 2.

### Embodiment 1: the first resource configuration includes a first parameter

In Embodiment 1, the first resource configuration includes a parameter (hereinafter referred to as the first parameter) indicating a time-domain starting position of an SL PRS resource. In other words, in Embodiment 1, the first resource configuration includes a parameter that directly indicates the time-domain starting position of the SL PRS resource. For example, the first resource configuration includes a starting OFDM symbol of the SL PRS resource (a starting point of an OFDM symbol(s) of the SL PRS resource).

In some embodiments, in addition to the first parameter, the first resource configuration can include other configuration parameters related to the SL PRS resource. For example, the first resource configuration can further include one or more of: a configuration parameter indicating an ID of the SL PRS resource, a parameter indicating a comb size for an SL PRS to be sent on the SL PRS resource, a parameter indicating an RE offset for an SL PRS to be sent on the SL PRS resource, or a parameter indicating the number of time-domain resources (e. g. OFDM symbols) occupied by the SL PRS resource. In some embodiments, the parameter indicating the number of time-domain resources occupied by the SL PRS resource can mean that the parameter can indicate the number of consecutive time-domain resources occupied, such as the number of consecutive OFDM symbols occupied, by the SL PRS resource.

As an example, the first resource configuration can include the following parameters: the configuration parameter indicating the ID of the SL PRS resource, the parameter indicating the comb size for an SL PRS to be sent on the SL PRS resource, the parameter indicating the RE offset for an SL PRS to be sent on the SL PRS resource, the first parameter, and the parameter indicating the number of time-domain resources occupied by the SL PRS resource. For example, the first resource configuration can include parameters {SL PRS resource ID, comb size $N$ for SL PRS sent on SL PRS resource, RE offset $C$ for SL PRS to be sent on the SL PRS resource, starting OFDM symbol $S$ of SL PRS resource, number $M$ of consecutive OFDM symbols occupied by SL PRS resource}.

In some embodiments, the SL PRS resource ID is unique within one time-domain unit, such as one slot.

As another example, the first resource configuration can include the following parameters: the configuration parameter indicating the ID of the SL PRS resource, the parameter indicating the comb size for an SL PRS to be sent on the SL PRS resource, the parameter indicating the RE offset for an SL PRS to be sent on the SL PRS resource, the first parameter, and the parameter indicating the number of time-domain resources occupied by the SL PRS resource. For example, the first resource configuration can include: {starting SL PRS resource ID A, comb size $N$ for SL PRS sent on SL PRS resource, starting OFDM symbol $S$ of SL PRS resource, number $M$ of consecutive OFDM symbols occupied by SL PRS resource}. In this case, for any one configuration, $N$ SL PRS resources with different RE offsets can be determined, where SL PRS resource IDs of the $N$ SL PRS resources are $A$, $A+1$, ..., $A+N-1$ respectively. Taking the slot structure illustrated in FIG. 20 as an example, it is assumed that the first resource configuration illustrated in FIG. 20 indicates that the starting SL PRS resource ID is 0 and N=4, then the first device can determine four SL PRS resources according to the configuration, where the four SL PRS resources are all located in OFDM symbols 7~10, a comb size for each of the four SL PRS resources is 4, and RE offsets for the four SL PRS resources are 0~3 respectively; and accordingly, corresponding SL PRS resource IDs are 0, 1, 2, 3 respectively.

In some embodiments, the first resource configuration is determined according to a resource for sending SL information other than the SL PRS resource in the resource pool. For example, the first resource configuration is determined according to one or more of the second parameter, the third parameter, or the fourth parameter described above.

In some embodiments, the number and/or position(s) of time-domain resource(s) occupied by a PSSCH DMRS in the resource pool may differ, and the time-domain resource occupied by the PSSCH DMRS in the resource pool can have influence on determination of the SL PRS resource. Therefore, in some embodiments, the first resource configuration can be determined according to the time-domain resource occupied by the PSSCH DMRS. For example, the time-domain resource occupied by the PSSCH DMRS in the resource pool can be indicated by a PSSCH DMRS pattern. That is, multiple different PSSCH DMRS patterns may be allowed for the resource pool, and the number and positions of PSSCH DMRSs in different PSSCH DMRS patterns may differ. Therefore, the first resource configuration can be determined according to the PSSCH DMRS pattern(s) allowed for the resource pool. In some embodiments, the time-domain resource occupied by the PSSCH DMRS cannot be used for the SL PRS resources, because transmission priority of a PSSCH DMRS is higher than transmission priority of an SL PRS.

In some embodiments, some time-domain unit(s) in the resource pool may be configured with a PSFCH resource(s), and time-domain resources occupied by a PSFCH and a GP preceding an OFDM symbol where the PSFCH is located cannot be used for the SL PRS resource. As a result, the number of resources that can be used for PSCCH and PSSCH transmission (including a time-domain resource where an AGC is located) is not equal in different time-domain units, where the time-domain resource where the AGC is located can be construed as a time-domain resource carrying a duplicated PSCCH/PSSCH. In some embodiments, the PSFCH resource cannot be used for the SL PRS resource, because an SL PRS can affect a PSFCH sent by other UEs in the resource pool.

Accordingly, in some embodiments, the first resource configuration can be determined based on a PSFCH resource configured in one time-domain unit or based on the number of resources that can be used for PSCCH and PSSCH transmission in the time-domain unit. For example, the time-domain unit is a slot, and the time-domain resource occupied by the resource is an OFDM symbol, in this case, only some slots in the resource pool are configured with a PSFCH resource(s), and as a result, the number of OFDM symbols that can be used for PSCCH and PSSCH transmission (including an OFDM symbol carrying a duplicated PSCCH/PSSCH, namely, an AGC symbol) is not equal in different slots. Therefore, the first resource configuration can be determined according to the number of OFDM symbols which are not used for a PSFCH and a GP in one slot in the resource pool, in other words, the first resource configuration can be determined according to the number of OFDM symbols (including an AGC symbol) that can be used for PSCCH and PSSCH transmission in one slot in the resource pool.

In some embodiments, if one slot is configured with a PSFCH resource, then 2 OFDM symbols in the slot are used for carrying a PSFCH, and one OFDM symbol preceding the two OFDM symbols and one OFDM symbol after the two OFDM symbols are used for GPs. With reference to the illustration of FIG. 9, OFDM symbols occupied by the PSFCH resource are generally symbols 11~12, and OFDM symbol 10 and OFDM symbol 13 are used for GPs. As such, the number of time-domain resources (including a time-domain resource where an AGC is located) that can be used for PSCCH and PSSCH transmission in the slot is 10.

In some embodiments, a time-domain resource (such as an OFDM symbol) where a PSCCH is located cannot be used for the SL PRS resource. Therefore, the first resource configuration can be determined according to the time-domain resource where the PSCCH is located. In this case, it can be considered that transmission priority of a PSCCH is higher than transmission priority of an SL PRS, but embodiments of the disclosure are not limited thereto. In some embodiments, the time-domain resource where the PSCCH is located can be used for the SL PRS resource.

For the sake of brevity, the number (i. e. the third parameter described above) of time-domain resources (including a time-domain resource where an AGC is located) that can be used for PSCCH and PSSCH transmission in one time-domain unit in the resource pool will be denoted by $l_d$ below for illustration. For the sake of brevity, in following elaborations, a time-domain resource occupied by a PSSCH DMRS in the resource pool (i. e. the second parameter described above) is indicated exemplarily by a PSSCH DMRS pattern.

Implementations for determining the first resource configuration according to the PSSCH DMRS pattern allowed for the resource pool and/or $l_d$ are given below by way of example.

## Implementation 1:

The first resource configuration is determined separately for different combinations of the PSSCH DMRS pattern and $l_d$, i. e. for different {PSSCH DMRS pattern, $l_d$}. In other words, the SL PRS resource is configured or pre-configured separately for different combinations of the PSSCH DMRS pattern and $l_d$.

In Implementation 1, each SL PRS configuration corresponds to a specific {PSSCH DMRS pattern, $l_d$}, that is, when different PSSCH DMRS patterns are allowed and/or there are time-domain units (such as slots) with different $l_d$ in the resource pool, the first resource configuration is configured separately for different {PSSCH DMRS pattern, $l_d$}, that is, the SL PRS resource is configured or pre-configured separately for different {PSSCH DMRS pattern, $l_d$}.

In some embodiments, with regard to an SL PRS resource configured or pre-configured for a specific {PSSCH DMRS pattern, $l_d$}, the SL PRS resource does not include a time-domain resource for PSCCH transmission (in other words, a time-domain resource where a PSCCH is located) as well as a time-domain resource included in the PSSCH DMRS pattern (in other words, a time-domain resource occupied by the PSSCH DMRS pattern). For example, for an SL PRS resource configured or pre-configured for a specific {PSSCH DMRS pattern, $I_d$}, the SL PRS resource does not include an OFDM symbol for PSCCH transmission as well as an OFDM symbol included in the PSSCH DMRS pattern.

As an example, it is assumed that PSSCH DMRS patterns spanning 2, 3, and 4 OFDM symbols are allowed for the resource pool, and a PSFCH period for the resource pool is 4, i. e., the PSFCH resource exists in the $0^{th}$, $4^{th}$, $8^{th}$,... slots in the resource pool. In each of these slots where the PSFCH resource exists, $I_d$=10, because in the slot where the PSFCH resource exists, a PSFCH occupies 2 OFDM symbols, excluding one GP symbol before the PSFCH and one GP symbol after the PSFCH, the number of remaining OFDM symbols that can be used for PSCCH and PSSCH transmission is 10. In other slots, there is no PSFCH resource, and in each of these slots where no PSFCH resource exists, $I_d$=13, because the last OFDM symbol in the slot is a GP symbol. In this case, there are six {PSSCH DMRS pattern, $I_d$} combinations, and the SL PRS resource is configured separately for each of the six different {PSSCH DMRS pattern, $I_d$} combinations.

**Implementation 2:**

The first resource configuration is determined separately for different $I_d$ (different values of $I_d$), in other words, the SL PRS resource is configured or pre-configured separately for different $I_d$.

In Implementation 2, the first resource configuration is determined separately for different $I_d$, and the number of time-domain resources occupied by a PSSCH DMRS corresponding to the first resource configuration can be the minimum number of time-domain resources occupied by a PSSCH DMRS(s) allowed for the resource pool. In this way, the SL PRS Tx terminal can only use a PSSCH DMRS resource with the minimum number of time-domain resources occupied by a PSSCH DMRS allowed for the resource pool, in other words, the SL PRS Tx terminal can only select the PSSCH DMRS resource with the minimum number of time-domain resources occupied by the PSSCH DMRS allowed for the resource pool.

Exemplarily, the time-domain resource(s) occupied by a PSSCH DMRS is indicated by a PSSCH DMRS pattern. Then the first resource configuration corresponds to a PSSCH DMRS pattern spanning the minimum number of PSSCH DMRS symbols allowed for the resource pool. That is, in Implementation 2, the first resource configuration is determined separately for different $I_d$, and the SL PRS Tx terminal only uses the PSSCH DMRS pattern spanning the minimum number of PSSCH DMRS symbols allowed for the resource pool, in other words, the SL PRS Tx terminal can only select the PSSCH DMRS pattern spanning the minimum number of PSSCH DMRS symbols allowed for the resource pool.

In Implementation 2, the first resource configuration (SL PRS resource configuration) corresponds to the PSSCH DMRS pattern spanning the minimum number of PSSCH DMRS symbols allowed for the resource pool, instead of configuring different SL PRS resources for different PSSCH DMRS patterns. In Implementation 2, if time-domain units (for example, slots) with different $I_d$ exist in the resource pool, the first resource configuration will be configured separately for different $I_d$. That is, in Implementation 2, for any $I_d$, an SL PRS resource configured or pre-configured does not include any OFDM symbol included in the PSSCH DMRS pattern spanning the minimum number of PSSCH DMRS symbols allowed for the resource pool, but may include an OFDM symbol included in other PSSCH DMRS patterns.

As an example, it is assumed that there are PSSCH DMRS patterns spanning 2, 3, and 4 OFDM symbols for the resource pool, and a PSFCH period for the resource pool is 4, that is, the PSFCH resource exists in the $0^{th}$, $4^{th}$, $8^{th}$,... slots in the resource pool. In each of these slots where the PSFCH resource exists, $I_d$=10. In other slots, there is no PSFCH resource, and $I_d$=13. In this case, there are two different $I_d$ {$I_d$=10 and $I_d$=13}. For the two different $I_d$=13, the SL PRS resource is configured separately, and the number of PSSCH DMRSs corresponding to the first resource configuration configured for each $I_d$ =13 is 2.

**Implementation 3:**

The first resource configuration is determined separately for different $I_d$ (different values of $I_d$), that is, the SL PRS resource is configured separately for different $I_d$.

In Implementation 3, the SL PRS resource corresponding to the first resource configuration does not include one or more of: the time-domain resource occupied by a PSSCH DMRS(s) allowed for the resource pool, or the time-domain resource where a PSCCH is located in the resource pool. That is, a time-domain resource occupied by any PSSCH DMRS configured for the resource pool and/or the time-domain resource where a PSCCH is located in the resource pool cannot be configured as an SL PRS resource. For example, the SL PRS resource corresponding to the first resource configuration does not include the time-domain resource occupied by a PSSCH DMRS allowed for the resource pool and the time-domain resource where a PSCCH is located in the resource pool. In other words, the time-domain resource occupied by any PSSCH DMRS configured for the resource pool and the time-domain resource where a PSCCH is located in the resource pool cannot be configured as an SL PRS resource.

For example, the time-domain resource occupied by a PSSCH DMRS is an OFDM symbol(s), the SL PRS resource corresponding to the first resource configuration does not include an OFDM symbol where a PSSCH DMRS pattern allowed for the resource pool is located and an OFDM symbol where a PSCCH is located in the resource pool. In other words, an OFDM symbol where any PSSCH DMRS pattern configured for the resource pool is located and an OFDM symbol where a PSCCH is located in the resource pool cannot be configured as an SL PRS resource.

In Implementation 3, the first resource configuration corresponds to all PSCCH DMRS patterns allowed for the resource pool. In Implementation 3, if there are time-domain units (for example, slots) with different $I_d$ in the resource pool, the first resource configuration will be configured for different $I_d$. That is, in Implementation 3, for any one of different $I_d$, an SL PRS resources configured or pre-configured does not include any OFDM symbol that may be used for a PSSCH DMRS, and also does not include an OFDM symbol where a PSCCH is located.

As an example, assuming that PSSCH DMRS patterns spanning 2 and 3 OFDM symbols are allowed for the resource pool, and a PSFCH period for the resource pool is 4, i. e., the PSFCH resource exists in the $0^{th}$, $4^{th}$, $8^{th}$,... slot in the resource pool. In each of these slots where the PSFCH resource exists, $I_d$=10. In other slots, there is no PSFCH resource, and in this case, $I_d$=13. In addition, in this example, it is assumed that the number of OFDM symbols occupied by a PSCCH in the resource pool is 2. For different $I_d$, examples of an OFDM symbol(s) that may be used for a PSSCH DMRS are illustrated in Table 3. Referring to Table 3, when $I_d$=13, any SL PRS resource configured or pre-configured does not include OFDM symbols 1, 2, 3, 6, 10, and 11. This is because when $I_d$=13, OFDM symbols 1, 3, 6, 10, and 11 can be taken as OFDM symbols for a PSSCH DMRS, and OFDM symbols 1 and 2 are OFDM symbols where a PSCCH is located. Therefore, OFDM symbols 1, 2, 3, 6, 10, and 11 cannot be used for an SL PRS resource. Still referring to Table 3, when $I_d$=10, any SL PRS resource configured or pre-configured does not include OFDM symbols 1, 2, 3, 4, 7, and 8. This is because when $I_d$=10, OFDM symbols 1, 3, 4, 7, and 8 can be used as OFDM symbols for a PSSCH DMRS, and OFDM symbols 1 and 2 are OFDM symbols where a PSCCH is located. Therefore, OFDM symbols 1, 2, 3, 4, 7, and 8 cannot be used for an SL PRS resource.

Table 3

| $I_d$ | OFDM symbol for PSSCH DMRS | | | | | |
|---|---|---|---|---|---|---|
| | Number of PSCCH symbols is 2 | | | Number of PSCCH symbols is 3 | | |
| | Number of PSSCH DMRS symbols | | | Number of PSSCH DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1,4,7 | | 4, 8 | 1,4,7 | |
| 10 | 3, 8 | 1,4,7 | | 4, 8 | 1,4,7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

**Implementation 4:**

The SL PRS resource corresponding to the first resource configuration does not include one or more of: the time-domain resource occupied by a PSSCH DMRS(s) allowed for the resource pool, or the time-domain resource where a PSCCH is located in the resource pool. That is, a time-domain resource occupied by any PSSCH DMRS configured for the resource pool and/or a time-domain resource where a PSCCH is located in the resource pool cannot be configured as an SL PRS resource. For example, the SL PRS resource corresponding to the first resource configuration does not include the time-domain resource occupied by the PSSCH DMRS allowed for the resource pool and the time-domain resource where a PSCCH is located in the resource pool. In other words, a time-domain resource occupied by any PSSCH DMRS configured for the resource pool and the time-domain resource where a PSCCH is located in the resource pool cannot be configured as an SL PRS resource.

As an example, the time-domain resource occupied by a PSSCH DMRS is an OFDM symbol, and in this case, the SL PRS resource corresponding to the first resource configuration does not include an OFDM symbol where a PSSCH DMRS pattern allowed for the resource pool is located and an OFDM symbol where a PSCCH is located in the resource pool. In other words, an OFDM symbol where any PSSCH DMRS pattern configured for the resource pool is located and the OFDM symbol where a PSCCH is located in the resource pool cannot be configured as an SL PRS resource.

In Implementation 4, the first resource configuration corresponds to all {PSSCH DMRS pattern, $l_d$} allowed for the resource pool, that is, in Implementation 4, the SL PRS resource is not configured separately for different PSSCH DMRS patterns and/or $l_d$.

For example, the time-domain resource occupied by a PSSCH DMRS is an OFDM symbol. In Implementation 4, an SL PRS resource configured or pre-configured does not include any OFDM symbol that may be used for a PSSCH DMRS in a slot with any $l_d$, and also does not include an OFDM symbol where a PSCCH is located. As an example, assuming that PSSCH DMRS patterns spanning 2 and 3 OFDM symbols are allowed for the resource pool, and a PSFCH period for the resource pool is 4, i. e., the PSFCH resource exists in the $0^{th}$, $4^{th}$, $8^{th}$, ... slots in the resource pool. In each of these slots where the PSFCH resource exists, $l_d$=10. In other slots, there is no PSFCH resource, and in this case, $l_d$=13. In addition, in this example, it is assumed that the number of OFDM symbols occupied by a PSCCH in the resource pool is 2. Referring to Table 3, any SL PRS resource configured or pre-configured does not include OFDM symbols 1, 2, 3, 4, 6, 7, 8, 10, and 11. That is, any SL PRS resource configured or pre-configured does not include a PSSCH DMRS symbol corresponding to $l_d$=13, does not include a PSSCH DMRS symbol corresponding to $l_d$=10, and also does not include an OFDM symbol where a PSCCH is located.

It should be noted that, for any one implementation (any one of Implementation 1 to Implementation 4) described in Embodiment 1, the number of SL PRS resources included in the first resource configuration determined according to the implementation may be 0, that is, no SL PRS resource exists, and embodiments of the disclosure are not limited in this regard. In other words, for any one of the above implementations, the number of SL PRS resources configured or pre-configured may be 0 for a certain {PSSCH DMRS pattern, $l_d$} or for a certain $l_d$.

In Embodiment 1, the SL PRS resource can be configured separately for different PSSCH DMRSs and/or $l_d$, which is more conducive to ensuring appropriateness and efficiency of the configured SL PRS resource.

### Embodiment 2: the first resource configuration does not include the first parameter

In Embodiment 2, the first resource configuration does not include a parameter (the first parameter mentioned above) indicating a time-domain starting position of an SL PRS resource. In other words, in Embodiment 2, the first resource configuration does not include a parameter that directly indicates the time-domain starting position of the SL PRS resource. For example, the first resource configuration does not include a starting OFDM symbol of the SL PRS resource (a starting point of an OFDM symbol(s) of the SL PRS resource).

In some embodiments, the first resource configuration can include one or more of: a configuration parameter indicating an ID of the SL PRS resource, a parameter indicating a comb size for an SL PRS to be sent on the SL PRS resource, a parameter indicating an RE offset for an SL PRS to be sent on the SL PRS resource, a parameter indicating the number of time-domain resources (e. g. OFDM symbols) occupied by the SL PRS resource, etc. In some embodiments, the parameter indicating the number of time-domain resources occupied by the SL PRS resource can mean that the parameter can indicate the number of consecutive time-domain resources occupied, such as the number of consecutive OFDM symbols occupied, by the SL PRS resource.

In some embodiments, the first resource configuration does not include the first parameter, but can include other configuration parameters for determining a time-domain starting position of the SL PRS resource. For example, the first resource configuration can include a parameter indicating the $1^{st}$ time-domain resource that can be used for the SL PRS resource in one time-domain unit (e. g., one slot). That is, in Embodiment 2, the first resource configuration includes a parameter indicating a possible time-domain starting position of the SL PRS resource. For detailed elaborations of the parameter, reference can be made to the foregoing elaborations.

In some embodiments, in Embodiment 2, the first resource configuration can include one or more of: a configuration parameter indicating an ID of the SL PRS resource, a parameter indicating a comb size for an SL PRS to be sent on the SL PRS resource, a parameter indicating an RE offset for an SL PRS to be sent on the SL PRS resource, a parameter indicating the number of time-domain resources (e. g. OFDM symbols) occupied by the SL PRS resource, the parameter indicating the possible time-domain starting position of the SL PRS resource (e. g. the parameter indicating the $1^{st}$ time-domain resource available for the SL PRS resource in one time-domain unit), etc. In some embodiments, the parameter indicating the number of time-domain resources occupied by the SL PRS resource can mean that the parameter can indicate the number of consecutive time-domain resources occupied, such as the number of consecutive OFDM symbols occupied, by the SL PRS resource.

In some embodiments, if the first resource configuration does not include the first parameter, the first device can indirectly determine the time-domain starting position of the SL PRS resource corresponding to the first resource configuration according to other parameters in the first resource configuration. For example, the first device can determine the time-domain starting position of the SL PRS resource according to a parameter indicating the number of time-domain resources occupied by the SL PRS resource and other conditions that need to be satisfied. Alternatively, the first device can determine the time-domain starting position of the SL PRS resource according to a parameter indicating the possible time-domain starting position of the SL PRS resource, a parameter indicating the number of time-domain resources occupied by the SL PRS resource, and other conditions that need to be satisfied.

In some embodiments, the parameter indicating the number of time-domain resources occupied by the SL PRS resource means that the parameter can indicate consecutive time-domain resources occupied by the SL PRS resource, for example, the parameter can indicate that the SL PRS resource occupies $M$ time-domain resources with consecutive indexes, where $M$ is a positive integer.

In some embodiments, if the first resource configuration does not include the first parameter, the first device can determine the time-domain resource(s) occupied by the SL PRS resource with reference to the last one or more time-domain resources in one time-domain unit. For example, the number of time-domain resources occupied by the SL PRS resource is $M$, and the $M$ time-domain resources can be the last $M$ time-domain resources with consecutive indexes satisfying a specific condition in one time-domain unit. For example, one time-domain unit is one slot, the SL PRS resource occupies $M$ OFDM symbols, and then the $M$ OFDM symbols can be the last $M$ OFDM symbols with consecutive indexes satisfying the specific condition in one slot. In this way, an SL PRS is always located on the last $M$ time-domain resources satisfying the specific condition in one time-domain unit, which can reduce impact of SL PRS transmission on transmission of 2$^{nd}$-stage SCI.

In some embodiments, if the first resource configuration does not include the first parameter, the first device can determine the time-domain resource occupied by the SL PRS resource with reference to the 1$^{st}$ time-domain resource that can be used for the SL PRS resource in one time-domain unit. For example, the number of time-domain resources occupied by the SL PRS resource is $M$, and the $M$ time-domain resources can be $M$ time-domain resources with consecutive indexes that start from the 1$^{st}$ time-domain resource available for the SL PRS resource and satisfy a specific condition in one time-domain unit. For example, one time-domain unit is one slot, the SL PRS resource occupies $M$ OFDM symbols, and the index of the 1$^{st}$ OFDM symbol available for the SL PRS resource in one slot is Q. In this case, the $M$ OFDM symbols can be $M$ OFDM symbols with consecutive indexes starting from Q and satisfying the specific condition. In this way, the 1$^{st}$ time-domain resource available for the SL PRS resource in one time-domain unit is introduced as a reference, which is more conducive to flexibility in configuring the position of the SL PRS resource.

Embodiments of the disclosure are not limited to determining the time-domain resource occupied by the SL PRS resource based on the reference points given above. For example, the time-domain resource occupied by the SL PRS resource can also be determined with reference to an index of a certain time-domain resource other than the 1$^{st}$ time-domain resource and the last time-domain resource in the $M$ time-domain resources.

In some embodiments, the foregoing condition for determining the time-domain starting position of the SL PRS resource can be related to a resource for sending SL information other than SL PRS in the resource pool. For example, the condition can be related to one or more of: a resource available for PSSCH transmission in the resource pool, a time-domain resource occupied by a PSSCH DMRS in the resource pool, a time-domain resource where a PSCCH is located in the resource pool, and the like. However, embodiments of the disclosure are not limited thereto. In some embodiments, the condition can also be related to other information, for example, related to a time-domain resource where a PSFCH is located in the resource pool.

Exemplarily, assuming that the number of time-domain resources occupied by the SL PRS resource is $M$, the specific condition can include one or more of: the $M$ time-domain resources with consecutive indexes are available for PSSCH transmission, none of the $M$ time-domain resources with consecutive indexes belongs to a time-domain resource occupied by a PSSCH DMRS, or no PSCCH exists on the $M$ time-domain resources with consecutive indexes. That is, the $M$ time-domain resources for SL PRS transmission can share a time-domain resource with a PSSCH, but time-domain resources where a PSSCH DMRS and a PSCCH are located cannot be used for SL PRS transmission because transmission priorities of a PSSCH DMRS and a PSCCH are higher than transmission priority of an SL PRS.

Embodiment 2 is elaborated below with reference to examples.

As an example, the first resource configuration can include the following parameters: the configuration parameter indicating the ID of the SL PRS resource, the parameter indicating a comb size for an SL PRS to be sent on the SL PRS resource, the parameter indicating an RE offset for an SL PRS to be sent on the SL PRS resource, and the parameter indicating the number of time-domain resources occupied by the SL PRS resource. For example, the first resource configuration can include parameters {SL PRS resource ID, comb size $N$ for SL PRS sent on SL PRS resource, RE offset C for SL PRS sent on SL PRS resource, the number $M$ of consecutive OFDM symbol occupied by SL PRS resource}.

In some embodiments, the SL PRS resource ID is unique within one time-domain unit, such as one slot.

In this example, the number $M$ of consecutive OFDM symbols occupied by the SL PRS resource can refer to the last M OFDM symbols with consecutive indexes satisfying the specific condition in one slot.

In some embodiments, the $M$ OFDM symbols with consecutive indexes satisfying the specific condition satisfy at least one of the following conditions: the $M$ OFDM symbols with consecutive indexes can be used for PSSCH transmission according to a configuration for the resource pool; none of the $M$ OFDM symbols with consecutive indexes belongs to a PSSCH DMRS pattern selected by the terminal device according to the configuration for the resource pool; or no PSCCH exists on any of the $M$ OFDM symbols according to the configuration for the resource pool. For example, the $M$ OFDM symbols with consecutive indexes need to satisfy all of the foregoing conditions.

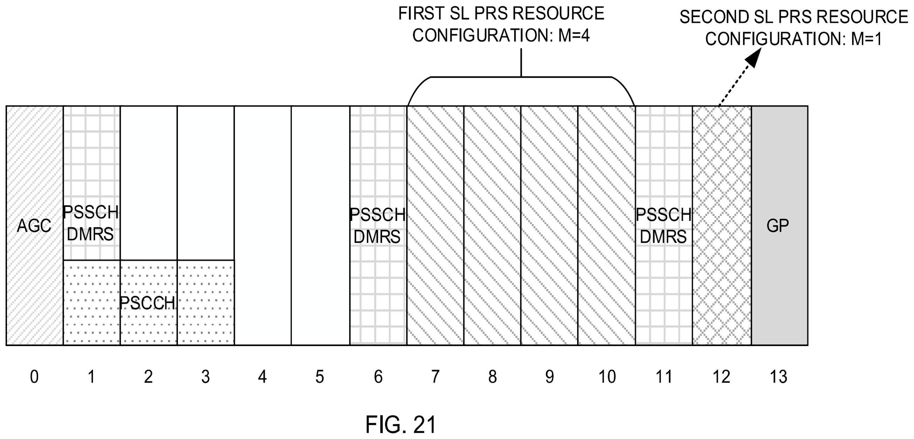

FIG. 21 is a schematic diagram illustrating a slot structure provided in another embodiment of the disclosure. In this example, it is assumed that an SL PRS resource configuration includes a first SL PRS resource configuration and a second SL PRS resource configuration. A parameter in the first SL PRS resource configuration indicates that the number $M$ of consecutive OFDM symbols occupied by an SL PRS resource is 4 ($M$=4), and therefore, the SL PRS resource determined according to the first SL PRS resource configuration is OFDM symbols 7~10. A parameter in the second SL PRS resource configuration indicates that the number $M$ of consecutive OFDM symbols occupied by an SL PRS resource is 1 ($M$=1), and therefore, the SL PRS resource determined according to the second SL PRS resource configuration is OFDM symbol 12.

As another example, the first resource configuration can include the following parameters: the configuration parameter indicating the ID of the SL PRS resource, the parameter indicating a comb size for an SL PRS to be sent on the SL PRS resource, the parameter indicating an RE offset for an SL PRS to be sent on the SL PRS resource, the parameter indicating the number of time-domain resources occupied by the SL PRS resource, and the parameter indicating the 1st time-domain resource available for the SL PRS resource in one time-domain unit. For example, the first resource configuration can include parameters {SL PRS resource ID, comb size $N$ for SL PRS sent on SL PRS resource, RE offset $C$ for SL PRS sent on SL PRS resource, number $M$ of consecutive OFDM symbols occupied by SL PRS resource, index $R$ of 1st OFDM symbol available for SL PRS resource in one slot}.

In some embodiments, the SL PRS resource ID is unique within one time-domain unit, such as one slot.

In this example, the $M$ consecutive OFDM symbols occupied by the SL PRS resource can refer to $M$ OFDM symbols with consecutive indexes starting from an OFDM symbol with an index of $R$ in one slot.

In some embodiments, the $M$ OFDM symbols with consecutive indexes satisfy at least one of the following conditions: the $M$ OFDM symbols with consecutive indexes are available for PSSCH transmission according to a configuration for the resource pool; none of the $M$ OFDM symbols with consecutive indexes belongs to a PSSCH DMRS pattern selected by the terminal device according to the configuration for the resource pool; or no PSCCH exists on any of the $M$ OFDM symbols according to the configuration for the resource pool. For example, the $M$ OFDM symbols with consecutive indexes need to satisfy all of the foregoing conditions.

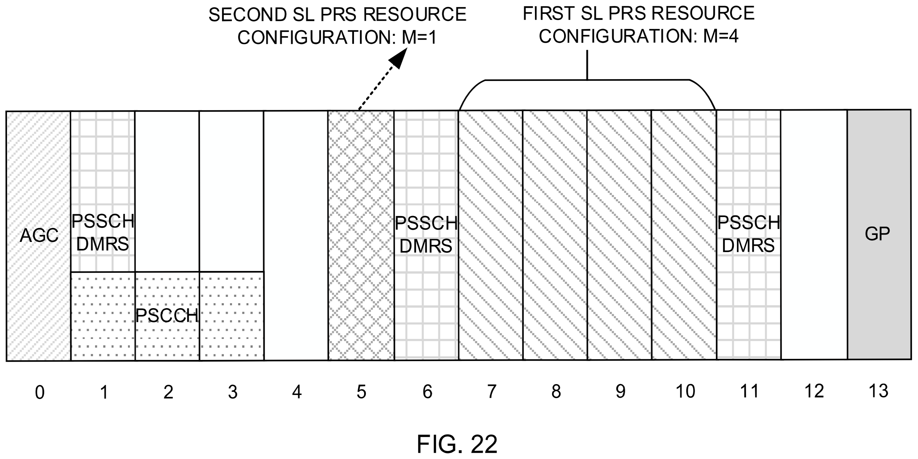

FIG. 22 is a schematic diagram illustrating a slot structure provided in another embodiment of the disclosure. In this example, it is assumed that an SL PRS resource configuration includes a first SL PRS resource configuration and a second SL PRS resource configuration. A parameter in the first SL PRS resource configuration indicates that the index $R$ of the 1st OFDM symbol available for an SL PRS resource in one slot is 5 ($R$=5), and the number $M$ of consecutive OFDM symbols occupied by an SL PRS resource is 4 ($M$=4); and therefore, the SL PRS resource determined according to the first SL PRS resource configuration is OFDM symbols 7~10. A parameter in the second SL PRS resource configuration indicates that the index R of the 1st OFDM symbol available for an SL PRS resource in one slot is 5 (R=5), and the number $M$ of consecutive OFDM symbols occupied by an SL PRS resource is 1 ($M$=1); and therefore, the SL PRS resource determined according to the second SL PRS resource configuration is OFDM symbol 5.

In Embodiment 2, SL PRS resource configuration does not need to be performed separately for different PSSCH DMRSs and/or $I_d$, which can simplify SL PRS resource configuration.

As described above, the first resource configuration can be determined according to the identity information of the SL PRS resource, which is described in detail below with reference to Embodiment 3.

**Embodiment 3: the first resource configuration is determined according to the identity information of the SL PRS resource**

In some embodiments, the first resource configuration corresponds to the identity information of the SL PRS resource, in other words, there is (exists) an association/correspondence between the first resource configuration and the identity information of the SL PRS resource. Therefore, a parameter(s) in the first resource configuration can be determined according to the identity information of the SL PRS resource.

In some embodiments, one or more of the following parameters in the first resource configuration can be determined according to the identity information of the SL PRS resource: a parameter indicating a comb size for an SL PRS to be sent on the SL PRS resource, a parameter indicating an RE offset for an SL PRS to be sent on the SL PRS resource, a parameter indicating the number of time-domain resources occupied by the SL PRS resource, and the like.

In some embodiments, the parameter indicating the time-domain starting position of the SRS resource in one time-domain unit (i. e. the first parameter mentioned above) can be determined according to the method described in Embodiment 1 or Embodiment 2. For example, a starting OFDM symbol of the SRS resource in one slot can be determined according to the method described in Embodiment 1 or Embodiment 2.

In some embodiments, the identity information of the SL PRS resource can be indicated by an SL PRS resource ID. For the sake of brevity, the following elaborations are made by taking the SL PRS resource ID as an example of the identity information of the SL PRS resource.

In Embodiment 3, there is a specific association between the SL PRS resource ID and one or more of the parameters in the first resource configuration, and therefore, the first device can determine the parameter in the first resource configuration according to the SL PRS resource ID. Exemplarily, there is a specific association between the SL PRS resource ID and the comb size for an SL PRS to be sent on the SL PRS resource, the RE offset for an SL PRS to be sent on the SL PRS resource, and the number of consecutive OFDM symbols occupied by the SL PRS resource in one slot. All these parameters can be determined according to the SL PRS resource ID.

In some embodiments, the association between the first resource configuration and the SL PRS resource ID can be configured by the network device. In some embodiments, the association between the first resource configuration and the SL PRS resource ID can be pre-defined in a protocol or pre-configured. Embodiments of the disclosure are not limited in this regard. That is, the association between the SL PRS resource ID and parameters in the first resource configuration can be configured by the network device, or can be pre-defined in a protocol or pre-configured, or the like.

In some embodiments, the parameter in the first resource configuration can also be determined according to other information besides the SL PRS resource ID. Exemplarily, the parameter in the first resource configuration is determined according to one or more of: the SL PRS resource ID, a comb size available for an SL PRS to be sent on the SL PRS resource, the number of RE offsets available for an SL PRS to be sent on the SL PRS resource, and the like.

As an example, the parameter in the first resource configuration can be determined based on the SL PRS resource ID and the comb size available for an SL PRS to be sent on the SL PRS resource. For example, the comb size available for the SL PRS to be sent on the SL PRS resource includes 1, 2, and 4, and the parameter in the first resource configuration can be determined according to the SL PRS resource ID and the sum of different comb sizes (1+2+4=7).

As another example, the parameter in the first resource configuration can be determined based on the SL PRS resource ID and the number of RE offsets available for an SL PRS to be sent on the SL PRS resource. For example, the comb size available for the SL PRS to be sent on the SL PRS resource includes 1, 2, and 4, and the parameter in the first resource configuration can be determined according to the SL PRS resource ID and the number of RE offsets (comb size = 1 corresponds to 1 RE offset; comb size = 2 corresponds to 2 RE offsets; and comb size = 4 corresponds to 4 RE offsets. Accordingly, the number of RE offsets available for the SL PRS is 1+2+4=7).

For ease of understanding, a specific example of determining the parameter in the first resource configuration according to the SL PRS resource ID is given below.

Assuming that the comb size available for an SL PRS is 1, 2, and 4, and for any given SL PRS resource ID (for example, the value of the ID is $D$), $D$ can start from 0, then the parameter in the first resource configuration can be determined in the following manner.

The comb size and the RE offset for the SL PRS to be sent on the SL PRS resource are determined as follows: if $\mathrm{mod}(D,7) = 0$, then the comb size is 1, and the RE offset is 0; if $\mathrm{mod}(D,7)=1$, then the comb size is 2, and the RE offset is 0; if $\mathrm{mod}(D,7)=2$, then the comb size is 2, and the RE offset is 1; if $\mathrm{mod}(D,7)=3$, then the comb size is 4, and the RE offset is 0; if $\mathrm{mod}(D,7)=4$, then the comb size is 4, and the RE offset is 1; if $\mathrm{mod}(D,7) = 5$, then the comb size is 4, and RE offset is 2; if $\mathrm{mod}(D,7) = 6$, then the comb size is 4, and RE offset is 3. In this example, *mod* represents a modulo operation.

The number of time-domain resources occupied by the SL PRS resource in one time-domain unit is determined as follows: the number of time-domain resources occupied by the SL PRS resource in one time-domain unit is equal to floor($D/7$)+1. In this example, *floor* denotes a rounding-down operation. For example, the number of consecutive OFDM symbols occupied by the SL PRS resource in one slot can be equal to floor($D/7$)+1.

The time-domain starting position of the SL PRS resource in one time-domain unit can be determined according to the method in Embodiment 1 or Embodiment 2. For example, the starting OFDM symbol of the SRS resource in one slot can be determined according to the method in Embodiment 1 or Embodiment 2.

It should be noted that, various embodiments described in the disclosure can be combined or applied independently, and embodiments of the disclosure are not limited in this regard. For example, the foregoing Embodiment 1 can be applied independently, or can be applied in combination with Embodiment 3. For another example, the foregoing Embodiment 2 can be applied independently, or can be applied in combination with Embodiment 3.

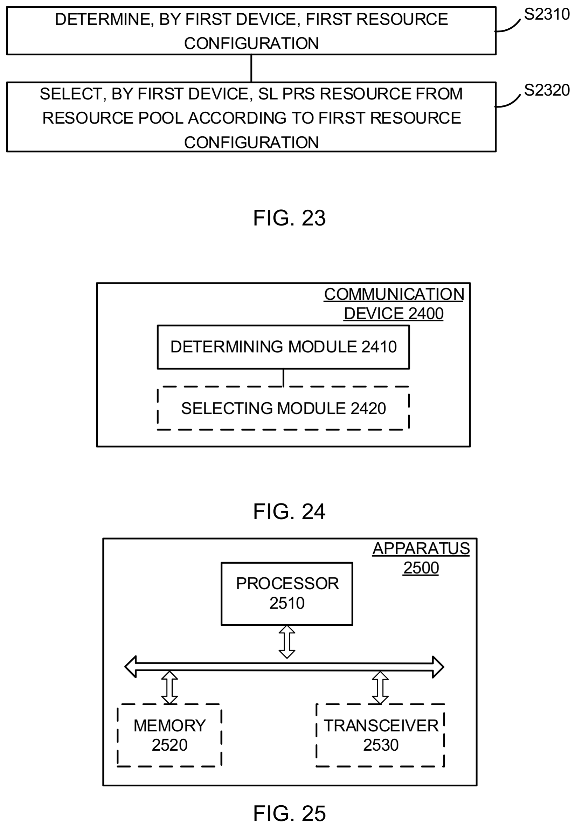

As described above, the first device in embodiments of the disclosure can be one or more of: an SL PRS Tx terminal, an SL PRS Rx terminal, a positioning server, or a server terminal device. In some embodiments, when the first device is a terminal device (for example, an SL PRS Tx terminal or an SL PRS Rx terminal), the first device can further select an SL PRS resource according to the first resource configuration, which is described below with reference to FIG. 23.

FIG. 23 is a schematic flowchart of a wireless communication method provided in another embodiment of the disclosure. The method illustrated in FIG. 23 can include step S2310 and step S2320.

Step S2310, a first device determines a first resource configuration.

For detailed elaborations of step S2310, reference can be made to the foregoing elaborations of step S1910, which is not described herein again for the sake of brevity.

Step S2320, the first device selects an SL PRS resource from a resource pool according to the first resource configuration.

That is, the first device can select an SL PRS resource from configured/pre-configured or candidate SL PRS resources in one time-domain unit (for example, slot) according to the first resource configuration, to perform SL PRS transmission or reception.

In some embodiments, one or more parameters for the SL PRS resource is selected by a physical layer of the first device. For example, all parameters for the SL PRS resource are selected by the physical layer of the first device. By selecting the parameters for the SL PRS resource by the physical layer of the first device, it is conducive to improving flexibility in resource selection.

As an example, an ID of the SL PRS resource, a comb size and an RE offset for an SL PRS to be sent on the SL PRS resource, a starting OFDM symbol of the SL PRS resource and the number of consecutive OFDM symbols occupied by the SL PRS resource in one slot, and a frequency-domain position of the SL PRS resource are all selected by the physical layer of the first device.

In some embodiments, some of the one or more parameters for the SL PRS resource are selected by a higher layer of the first device, and the rest of the one or more parameters are selected by the physical layer of the first device.

The higher layer of the first device can have various types. For example, the higher layer of the first device can refer to a medium access control (MAC) layer of the first device. For another example, the higher layer of the first device can refer to an SLPP layer of the first device. Embodiments of the disclosure are not limited in this regard.

As an example, a parameter indicating the frequency-domain position of the SL PRS resource in the one or more parameters for the SL PRS resource can be selected by the physical layer of the first device, and the rest of parameters except the parameter can be selected by the higher layer of the first device. For example, the frequency-domain position of the SL PRS resource is selected by the physical layer of the first device, while the ID of the SL PRS resource, the comb size and the RE offset for an SL PRS to be sent on the SL PRS resource, and the starting OFDM symbol of the SL PRS resource and the number of consecutive OFDM symbol occupied by the SL PRS resource in one slot are selected by the higher layer (such as the MAC layer or the SLPP layer) of the first device.

As another example, a parameter related to SL positioning in the one or more parameters for the SL PRS resource can be selected by the higher layer of the first device, and the rest of parameters except the parameter related to SL positioning can be selected by the physical layer of the first device. This is because by determining the parameter related to SL positioning by the higher layer of the first device, it is beneficial to satisfying QoS requirements of a positioning service; and by selecting the rest of parameters by the physical layer, it is beneficial to improving flexibility in resource selection.

In some embodiments, the parameter related to SL positioning can include one or more of: the number of time-domain resources occupied by the SL PRS resource, or a comb size for an SL PRS to be sent on the SL PRS resource. The number of time-domain resources occupied by the SL PRS resource and the comb size for an SL PRS to be sent on the SL PRS resource will influence positioning accuracy, and therefore, the two parameters are determined by the higher layer of the first device, which helps to satisfy QoS requirements of a positioning service. For example, the number of OFDM symbols occupied by the SL PRS resource and the comb size for an SL PRS to be sent on the SL PRS resource can be selected by the higher layer (such as the MAC layer or the SLPP layer) of the first device, while parameters such as the ID of the SL PRS resource, the RE offset for an SL PRS to be sent on the SL PRS resource, the starting OFDM symbol of the SL PRS resource in one slot, and the frequency-domain position of the SL PRS resource can be selected by the physical layer of the first device.

In some embodiments, the SL PRS Rx terminal can receive an SL PRS according to one or more of the following information: whether a PSFCH resource exists in a time-domain unit (such as a slot), an SL PRS resource ID indicated by 2nd-stage SCI received, a DMRS pattern indicated by 1st-stage SCI received, and the like.

The method embodiments of the disclosure are described in detail above with reference to FIG. 1 to FIG. 23, and apparatus embodiments of the disclosure are described in detail below with reference to FIG. 24 to FIG. 25. It should be understood that, the elaboration of the method embodiments corresponds to the elaboration of the apparatus embodiments. Therefore, for part not described in detail, reference can be made to the foregoing method embodiments.

FIG. 24 is a schematic structural diagram of a communication device provided in embodiments of the disclosure. The communication device 2400 illustrated in FIG. 24 can be any first device described above. The communication device 2400 can include a determining module 2410. The determining module 2410 can be configured to determine a first resource configuration, where the first resource configuration is used for configuring an SL PRS resource in a resource pool.

Optionally, the first resource configuration includes a first parameter, where the first parameter indicates a time-domain starting position of the SL PRS resource.

Optionally, the first resource configuration further includes one or more of: a configuration parameter indicating an ID of the SL PRS resource; a parameter indicating a comb size for an SL PRS to be sent on the SL PRS resource; a parameter indicating an RE offset for the SL PRS to be sent on the SL PRS resource; or a parameter indicating the number of time-domain resources occupied by the SL PRS resource.

Optionally, the first resource configuration is determined according to one or more of: a second parameter indicating a time-domain resource occupied by a PSSCH DMRS allowed for the resource pool; a third parameter indicating the number of time-domain resources which are not used for PSFCH transmission and a GP in one time-domain unit in the resource pool; or a fourth parameter indicating a time-domain resource where a PSCCH is located in the resource pool.

Optionally, different combinations of the second parameter and the third parameter correspond to different first resource configurations.

Optionally, different second parameters correspond to different first resource configurations.

Optionally, the number of time-domain resources occupied by a PSSCH DMRS corresponding to the first resource configuration is the minimum number of time-domain resources occupied by the PSSCH DMRS allowed for the resource pool.

Optionally, the SL PRS resource corresponding to the first resource configuration does not include one or more of: the time-domain resource occupied by the PSSCH DMRS allowed for the resource pool; or the time-domain resource where a PSCCH is located in the resource pool.

Optionally, the first resource configuration includes one or more of: a configuration parameter indicating an ID of the SL PRS resource; a parameter indicating a comb size for an SL PRS to be sent on the SL PRS resource; a parameter indicating an RE offset for the SL PRS to be sent on the SL PRS resource; a parameter indicating the number of time-domain resources occupied by the SL PRS resource; or a parameter indicating a $1^{st}$ time-domain resource available for the SL PRS resources in one time-domain unit.

Optionally, the SL PRS resource occupies $M$ time-domain resources, where the M time-domain resources are last $M$ time-domain resources with consecutive indexes in one time-domain unit; or the $M$ time-domain resources are $M$ time-domain resources with consecutive indexes which start from a $1^{st}$ time-domain resource available for the SL PRS resource in one time-domain unit.

Optionally, the $M$ time-domain resources with consecutive indexes satisfy one or more of the following conditions: the $M$ time-domain resources with consecutive indexes are available for PSSCH transmission; none of the $M$ time-domain resources with consecutive indexes belongs to a time-domain resource occupied by a PSSCH DMRS; or no PSCCH exists on the $M$ time-domain resources with consecutive indexes.

Optionally, the configuration parameter indicating the ID of the SL PRS resource includes one or more of: a parameter indicating the ID of the SL PRS resource; or a parameter indicating a starting ID of the SL PRS resource.

Optionally, the first resource configuration corresponds to identity information of the SL PRS resource, and a parameter in the first resource configuration is determined according to the identity information of the SL PRS resource.

Optionally, the identity information of the SL PRS resource is indicated by the ID of the SL PRS resource, and the parameter in the first resource configuration is determined according to one or more of: the ID of the SL PRS resource; a comb size available for an SL PRS to be sent on the SL PRS resource; or the number of RE offsets available for the SL PRS to be sent on the SL PRS resource.

Optionally, the parameter in the first resource configuration includes one or more of: a parameter indicating a comb size for an SL PRS to be sent on the SL PRS resource; a parameter indicating an RE offset for the SL PRS to be sent on the SL PRS resource; or a parameter indicating the number of time-domain resources occupied by the SL PRS resource.

Optionally, the first resource configuration is determined according to one or more of: configuration information for the resource pool, positioning requirement information of a terminal device, or the identity information of the SL PRS resource.

Optionally, the time-domain resource occupied by the SL PRS resource includes one or more OFDM symbols, and at least one OFDM symbol in the one or more OFDM symbols is included in different SL PRS resource configurations.

Optionally, the first device includes one or more of: a terminal device or a positioning server.

Optionally, the first device is a terminal device, and the communication device further includes a selecting module 2420. The selecting module 2420 is configured to select an SL PRS resource from the resource pool according to the first resource configuration.

Optionally, one or more parameters for the SL PRS resource is selected by a physical layer of the first device.

Optionally, some of the one or more parameters for the SL PRS resource is selected by a higher layer of the first device, and the rest of the one or more parameters is selected by a physical layer of the first device.

Optionally, a parameter indicating a frequency-domain position of the SL PRS resource in the one or more parameters is selected by the physical layer of the first device, and the one or more parameters except the parameter indicating the frequency-domain position of the SL PRS resource is selected by the higher layer of the first device. Alternatively, a parameter related to SL positioning in the one or more parameters is selected by the higher layer of the first device, and the one or more parameters except the parameter related to SL positioning is selected by the physical layer of the first device.

Optionally, the parameter related to SL positioning includes one or more of: the number of time-domain resources occupied by the SL PRS resource, or a comb size for an SL PRS to be sent on the SL PRS resource.

Optionally, the determining module 2410 can be a processor 2510. The communication device 2400 can further include a transceiver 2530 and a memory 2520, which are specifically illustrated in FIG. 25.

FIG. 25 is a schematic structural diagram of a communication apparatus according to embodiments of the disclosure. A dashed line in FIG. 25 indicates that the unit or module is optional. The apparatus 2500 can be a chip, a terminal device, or a network device.

The apparatus 2500 can include one or more processors 2510. The processors 2510 can support the apparatus 2500 to implement methods described in the foregoing method embodiments. The processor 2510 can be a general-purpose processor or a dedicated processor. For example, the processor can be a central processing unit (CPU). Alternatively, the processor can also be other general-purpose processors, a digital signal processor (DSP), an application specific integrated circuit (ASIC), a field programmable gate array (FPGA), or other programmable logic devices, discrete gates or transistor logic devices, discrete hardware components. The general-purpose processor can be a microprocessor, or the processor can be any conventional processor.

The apparatus 2500 can further include one or more memories 2520. The memory 2520 is configured to store programs. The programs can be executed by the processor 2510, to cause the processor 2510 to perform the method described in the foregoing method embodiments. The memory 2520 can be separate from or integrated into the processor 2510.

The apparatus 2500 can further include a transceiver 2530. The processor 2510 can communicate with other devices or chips via the transceiver 2530. For example, the processor 2510 can perform data transmission and reception with other devices or chips via the transceiver 2530.

Embodiments of the disclosure further provide a computer-readable storage medium. The computer-readable storage medium is configured to store programs. The computer-readable storage medium can be applied to a terminal or a network device provided in embodiments of the disclosure, and the programs are operable with a computer to implement methods performed by the terminal or the network device in various embodiments of the disclosure.

Embodiments of the disclosure further provide a computer program product. The computer program product includes programs. The computer program product can be applied to a terminal or a network device provided in embodiments of the disclosure, and the programs are operable with a computer to implement methods performed by the terminal or the network device in various embodiments of the disclosure.

Embodiments of the disclosure further provide a computer program. The computer program can be applied to a terminal or a network device provided in embodiments of the disclosure, and the computer program is operable with a computer to implement methods performed by the terminal or the network device in various embodiments of the disclosure.

It should also be understood that, the terms "system" and "network" herein can be used interchangeably throughout the disclosure. In addition, the terms used in the disclosure are only used to explain embodiments of the disclosure, and are not intended to limit the disclosure. The terms "first", "second", "third", and "fourth", etc. in the specification and claims of the disclosure and in the drawings are used for distinguishing different objects rather than describing a particular order. Furthermore, the terms "including", "comprising", "having", and any variations thereof are intended to cover a non-exclusive inclusion.

In embodiments of the disclosure, "indication" referred to in embodiments of the disclosure can be a direct indication, can be an indirect indication, or can mean that there is an association. For example, $A$ indicates $B$ may can that $A$ directly indicates $B$, for instance, B can be obtained according to $A$; can mean that $A$ indirectly indicates $B$, for instance, $A$ indicates $C$, and $B$ can be obtained according to $C$; or can mean that that there is an association between $A$ and $B$.

In embodiments of the disclosure, "$B$ corresponding to $A$" indicates that $B$ is associated with $A$, and $B$ can be determined according to $A$. However, it should be further understood that, "determine $B$ according to $A$" does not mean that $B$ is determined according to $A$ only, and $B$ can also be determined according to $A$ and/or other information.

In embodiments of the disclosure, the term "correspondence" may mean that there is a direct or indirect correspondence between the two, may mean that there is an association between the two, or may mean a relationship of indicating and indicated or configuring and configured, etc.

The term "include" mentioned in embodiments of the disclosure can refer to direct inclusion or indirect inclusion. Optionally, "include" mentioned in embodiments of the disclosure can be replaced by "indicate" or "be used for determining". For example, "$A$ includes $B$" can be replaced by "$A$ indicates $B$" or "$A$ is used for determining $B$".

In embodiments of the disclosure, the "pre-defined" or "pre-configured" can be implemented by pre-storing a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" can refer to a communication standard protocol, which can include, for example, an LTE protocol, an NR protocol, and a protocol applied to a future communication system, and the disclosure is not limited in this regard.

The term "and/or" in embodiments of the disclosure only describes an association between associated objects, which means that there can be three relationships. For example, $A$ and/or $B$ can mean $A$ alone, both $A$ and $B$ exist, and $B$ alone. In addition, the character "/" herein generally indicates that the associated objects are in an "or" relationship.

In various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be appreciated that the systems, apparatuses, and methods disclosed in embodiments of the disclosure can also be implemented in various other manners. For example, the above apparatus embodiments are merely illustrative, e.g., the division of units is only a division of logical functions, and other manners of division can be available in practice, e.g., multiple units or assemblies can be combined or can be integrated into another system, or some features can be ignored or skipped. In other respects, the coupling or direct coupling or communication connection as illustrated or discussed can be an indirect coupling or communication connection through some interface, device, or unit, and can be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1. A wireless communication method, comprising:
determining, by a first device, a first resource configuration, wherein the first resource configuration is used for configuring a sidelink positioning reference signal (SL PRS) resource in a resource pool.

2. The method of claim 1, wherein the first resource configuration comprises a first parameter, wherein the first parameter indicates a time-domain starting position of the SL PRS resource.

3. The method of claim 2, wherein the first resource configuration further comprises one or more of:

   a configuration parameter indicating an identity (ID) of the SL PRS resource;
   a parameter indicating a comb size for an SL PRS to be sent on the SL PRS resource;
   a parameter indicating a resource element (RE) offset for the SL PRS to be sent on the SL PRS resource; or
   a parameter indicating the number of time-domain resources occupied by the SL PRS resource.

4. The method of claim 2 or 3, wherein the first resource configuration is determined according to one or more of:

   a second parameter indicating a time-domain resource occupied by a physical sidelink shared channel-demodulation reference signal (PSSCH DMRS) allowed for the resource pool;
   a third parameter indicating the number of time-domain resources which are not used for physical sidelink feedback channel (PSFCH) transmission and a guard period (GP) in one time-domain unit in the resource pool; or

a fourth parameter indicating a time-domain resource where a physical sidelink control channel (PSCCH) is located in the resource pool.

5. The method of claim 4, wherein different combinations of the second parameter and the third parameter correspond to different first resource configurations.

6. The method of claim 4, wherein different second parameters correspond to different first resource configurations.

7. The method of claim 6, wherein the number of time-domain resources occupied by a PSSCH DMRS corresponding to the first resource configuration is the minimum number of time-domain resources occupied by the PSSCH DMRS allowed for the resource pool.

8. The method of claim 4 or 6, wherein the SL PRS resource corresponding to the first resource configuration does not comprise one or more of:

   the time-domain resource occupied by the PSSCH DMRS allowed for the resource pool; or
   the time-domain resource where a PSCCH is located in the resource pool.

9. The method of claim 1, wherein the first resource configuration comprises one or more of:

   a configuration parameter indicating an ID of the SL PRS resource;
   a parameter indicating a comb size for an SL PRS to be sent on the SL PRS resource;
   a parameter indicating an RE offset for the SL PRS to be sent on the SL PRS resource;
   a parameter indicating the number of time-domain resources occupied by the SL PRS resource; or
   a parameter indicating a $1^{st}$ time-domain resource available for the SL PRS resources in one time-domain unit.

10. The method of claim 9, wherein the SL PRS resource occupies $M$ time-domain resources, wherein

    the $M$ time-domain resources are last $M$ time-domain resources with consecutive indexes in one time-domain unit; or
    the $M$ time-domain resources are $M$ time-domain resources with consecutive indexes which start from a $1^{st}$ time-domain resource available for the SL PRS resource in one time-domain unit.

11. The method of claim 10, wherein the $M$ time-domain resources with consecutive indexes satisfy one or more of the following conditions:

    the $M$ time-domain resources with consecutive indexes are available for PSSCH transmission;
    none of the $M$ time-domain resources with consecutive indexes belongs to a time-domain resource occupied by a PSSCH DMRS; or
    no PSCCH exists on the M time-domain resources with consecutive indexes.

12. The method of any of claims 3 to 11, wherein the configuration parameter indicating the ID of the SL PRS resource comprises one or more of:

    a parameter indicating the ID of the SL PRS resource; or
    a parameter indicating a starting ID of the SL PRS resource.

13. The method of any of claims 1 to 12, wherein the first resource configuration corresponds to identity information of the SL PRS resource, and a parameter in the first resource configuration is determined according to the identity information of the SL PRS resource.

14. The method of claim 13, wherein the identity information of the SL PRS resource is indicated by the ID of the SL PRS resource, and the parameter in the first resource configuration is determined according to one or more of:

    the ID of the SL PRS resource;
    a comb size available for an SL PRS to be sent on the SL PRS resource; or
    the number of RE offsets available for the SL PRS to be sent on the SL PRS resource.

15. The method of claim 13 or 14, wherein the parameter in the first resource configuration comprises one or more of:

   a parameter indicating a comb size for an SL PRS to be sent on the SL PRS resource;
   a parameter indicating an RE offset for the SL PRS to be sent on the SL PRS resource; or
   a parameter indicating the number of time-domain resources occupied by the SL PRS resource.

16. The method of any of claims 1 to 15, wherein the first resource configuration is determined according to one or more of: configuration information for the resource pool, positioning requirement information of a terminal device, or the identity information of the SL PRS resource.

17. The method of any of claims 1 to 16, wherein the time-domain resource occupied by the SL PRS resource comprises one or more orthogonal frequency division multiplexing (OFDM) symbols, and at least one OFDM symbol in the one or more OFDM symbols is comprised in different SL PRS resource configurations.

18. The method of any of claims 1 to 17, wherein the first device comprises one or more of: a terminal device or a positioning server.

19. The method of claim 18, wherein the first device is a terminal device, and the method further comprises:
   selecting, by the first device, an SL PRS resource from the resource pool according to the first resource configuration.

20. The method of claim 19, wherein one or more parameters for the SL PRS resource is selected by a physical layer of the first device.

21. The method of claim 19, wherein some of the one or more parameters for the SL PRS resource is selected by a higher layer of the first device, and the rest of the one or more parameters is selected by a physical layer of the first device.

22. The method of claim 21, wherein

   a parameter indicating a frequency-domain position of the SL PRS resource in the one or more parameters is selected by the physical layer of the first device, and the one or more parameters except the parameter indicating the frequency-domain position of the SL PRS resource is selected by the higher layer of the first device; or
   a parameter related to SL positioning in the one or more parameters is selected by the higher layer of the first device, and the one or more parameters except the parameter related to SL positioning is selected by the physical layer of the first device.

23. The method of claim 22, wherein the parameter related to SL positioning comprises one or more of: the number of time-domain resources occupied by the SL PRS resource, or a comb size for an SL PRS to be sent on the SL PRS resource.

24. A communication device, being a first device and comprising:
   a determining module configured to determine a first resource configuration, wherein the first resource configuration is used for configuring a sidelink positioning reference signal (SL PRS) resource in a resource pool.

25. The communication device of claim 24, wherein the first resource configuration comprises a first parameter, wherein the first parameter indicates a time-domain starting position of the SL PRS resource.

26. The communication device of claim 25, wherein the first resource configuration further comprises one or more of:

   a configuration parameter indicating an identity (ID) of the SL PRS resource;
   a parameter indicating a comb size for an SL PRS to be sent on the SL PRS resource;
   a parameter indicating a resource element (RE) offset for the SL PRS to be sent on the SL PRS resource; or
   a parameter indicating the number of time-domain resources occupied by the SL PRS resource.

27. The communication device of claim 25 or 26, wherein the first resource configuration is determined according to one or more of:

   a second parameter indicating a time-domain resource occupied by a physical sidelink shared channel-demodulation reference signal (PSSCH DMRS) allowed for the resource pool;

a third parameter indicating the number of time-domain resources which are not used for physical sidelink feedback channel (PSFCH) transmission and a guard period (GP) in one time-domain unit in the resource pool; or a fourth parameter indicating a time-domain resource where a physical sidelink control channel (PSCCH) is located in the resource pool.

28. The communication device of claim 27, wherein different combinations of the second parameter and the third parameter correspond to different first resource configurations.

29. The communication device of claim 27, wherein different second parameters correspond to different first resource configurations.

30. The communication device of claim 29, wherein the number of time-domain resources occupied by a PSSCH DMRS corresponding to the first resource configuration is the minimum number of time-domain resources occupied by the PSSCH DMRS allowed for the resource pool.

31. The communication device of claim 27 or 29, wherein the SL PRS resource corresponding to the first resource configuration does not comprise one or more of:

the time-domain resource occupied by the PSSCH DMRS allowed for the resource pool; or
the time-domain resource where a PSCCH is located in the resource pool.

32. The communication device of claim 24, wherein the first resource configuration comprises one or more of:

a configuration parameter indicating an ID of the SL PRS resource;
a parameter indicating a comb size for an SL PRS to be sent on the SL PRS resource;
a parameter indicating an RE offset for the SL PRS to be sent on the SL PRS resource;
a parameter indicating the number of time-domain resources occupied by the SL PRS resource; or
a parameter indicating a $1^{st}$ time-domain resource available for the SL PRS resources in one time-domain unit.

33. The communication device of claim 32, wherein the SL PRS resource occupies M time-domain resources, wherein

the $M$ time-domain resources are last $M$ time-domain resources with consecutive indexes in one time-domain unit; or
the $M$ time-domain resources are $M$ time-domain resources with consecutive indexes which start from a $1^{st}$ time-domain resource available for the SL PRS resource in one time-domain unit.

34. The communication device of claim 33, wherein the M time-domain resources with consecutive indexes satisfy one or more of the following conditions:

the $M$ time-domain resources with consecutive indexes are available for PSSCH transmission;
none of the $M$ time-domain resources with consecutive indexes belongs to a time-domain resource occupied by a PSSCH DMRS; or
no PSCCH exists on the $M$ time-domain resources with consecutive indexes.

35. The communication device of any of claims 26 to 34, wherein the configuration parameter indicating the ID of the SL PRS resource comprises one or more of:

a parameter indicating the ID of the SL PRS resource; or
a parameter indicating a starting ID of the SL PRS resource.

36. The communication device of any of claims 24 to 35, wherein the first resource configuration corresponds to identity information of the SL PRS resource, and a parameter in the first resource configuration is determined according to the identity information of the SL PRS resource.

37. The communication device of claim 36, wherein the identity information of the SL PRS resource is indicated by the ID of the SL PRS resource, and the parameter in the first resource configuration is determined according to one or more of:

the ID of the SL PRS resource;
a comb size available for an SL PRS to be sent on the SL PRS resource; or
the number of RE offsets available for the SL PRS to be sent on the SL PRS resource.

38. The communications device of claim 36 or 37, wherein the parameter in the first resource configuration comprises one or more of:

a parameter indicating a comb size for an SL PRS to be sent on the SL PRS resource;
a parameter indicating an RE offset for the SL PRS to be sent on the SL PRS resource; or
a parameter indicating the number of time-domain resources occupied by the SL PRS resource.

39. The communication device of any of claims 24 to 38, wherein the first resource configuration is determined according to one or more of: configuration information for the resource pool, positioning requirement information of a terminal device, or the identity information of the SL PRS resource.

40. The communication device of any of claims 24 to 39, wherein the time-domain resource occupied by the SL PRS resource comprises one or more orthogonal frequency division multiplexing (OFDM) symbols, and at least one OFDM symbol in the one or more OFDM symbols is comprised in different SL PRS resource configurations.

41. The communication device of any of claims 24 to 40, wherein the first device comprises one or more of: a terminal device or a positioning server.

42. The communication device of claim 41, wherein the first device is a terminal device, and the communication device further comprises:
a selecting module configured to select an SL PRS resource from the resource pool according to the first resource configuration.

43. The communication device of claim 42, wherein one or more parameters for the SL PRS resource is selected by a physical layer of the first device.

44. The communication device of claim 42, wherein some of the one or more parameters for the SL PRS resource is selected by a higher layer of the first device, and the rest of the one or more parameters is selected by a physical layer of the first device.

45. The communication device of claim 44, wherein

a parameter indicating a frequency-domain position of the SL PRS resource in the one or more parameters is selected by the physical layer of the first device, and the one or more parameters except the parameter indicating the frequency-domain position of the SL PRS resource is selected by the higher layer of the first device; or
a parameter related to SL positioning in the one or more parameters is selected by the higher layer of the first device, and the one or more parameters except the parameter related to SL positioning is selected by the physical layer of the first device.

46. The communication device of claim 45, wherein the parameter related to SL positioning comprises one or more of: the number of time-domain resources occupied by the SL PRS resource, or a comb size for an SL PRS to be sent on the SL PRS resource.

47. A communication device, comprising:

a memory configured to store programs; and
a processor configured to invoke the programs from the memory, to cause the communication device to perform the method of any of claims 1 to 23.

48. An apparatus, comprising:
a processor configured to invoke programs from a memory to cause the apparatus to perform the method of any of claims 1 to 23.

49. A chip, comprising:

a processor, configured to invoke programs from a memory, to cause a device equipped with the chip to perform the method of any of claims 1 to 23.

50. A computer-readable storage medium, configured to store programs which are operable with a computer to perform the method of any of claims of any of claims 1 to 23.

51. A computer program product, comprising programs which are operable with a computer to perform the method of any of claims 1 to 23.

52. A computer program, operable with a computer to perform the method of any of claims 1 to 23.

FIG. 1

FIG. 2

FIG. 3

120b     120b

←SL COMMUNICATION→

## FIG. 4

COMMUNICATION GROUP

TERMINAL DEVICE 1

RESOURCE ALLOCATION    RESOURCE ALLOCATION

TERMINAL DEVICE 2

TERMINAL DEVICE 3

SL COMMUNICATION

## FIG. 5

TERMINAL DEVICE 2

TERMINAL DEVICE 6

**TERMINAL DEVICE 1**

TERMINAL DEVICE 3

TERMINAL DEVICE 5

TERMINAL DEVICE 4

## FIG. 6

TERMINAL
DEVICE 1

SL DATA

TERMINAL
DEVICE 2

FIG. 7

COMMUNICATION
GROUP

TERMINAL
DEVICE 2

TERMINAL
DEVICE 1

TERMINAL
DEVICE 3

TERMINAL
DEVICE 4

FIG. 8

FIG. 9

FIG. 10

EP 4 654 699 A1

FIG. 11

| RE#0 | RE#1 | RE#2 | RE#3 | RE#4 | RE#5 | RE#6 | RE#7 | RE#8 | RE#9 | RE#10 | RE#11 |
|---|---|---|---|---|---|---|---|---|---|---|---|
| PORT0/ PORT1 | | PORT0/ PORT1 | | PORT0/ PORT1 | | PORT0/ PORT1 | | PORT0/ PORT1 | | PORT0/ PORT1 | |

FIG. 12

PSCCH
FREQUENCY-
DOMAIN RESOURCE
INDICATOR

SUBCHANNEL
SIZE

PSSCH

PSCCH

PSSCH

PSCCH

PSSCH

PSCCH

NUMBER OF
SUBCHANNELS=3

INDEX OF
STARTING RB OF
SUBCHANNEL

f

t

FIG. 13

SLOT 0

SLOT 1

DL SYMBOL

FLEXIBLE SYMBOL

UL SYMBOL

FIG. 14

⊡ RESOURCE FOR DL PRS TRANSMISSION

RE#11

RE#10

RE#9

RE#8

RE#7

RE#6

RE#5

RE#4

RE#3

RE#2

RE#1

RE#0

COMB SIZE=2, RE OFFSET=0

RE#11

RE#10

RE#9

RE#8

RE#7

RE#6

RE#5

RE#4

RE#3

RE#2

RE#1

RE#0

COMB SIZE=2, RE OFFSET=1

FIG. 15

| 0 | 1 | 2 | 3 | 4 | 0 | 1 | 2 | 3 | 4 | 0 | 1 | 2 | 3 | 4 | 0 | 1 | 2 | 3 | 4 |

0  1  2  3  4  5  6  7  8  9  10  11  12  13  14  15  16  17  18  19

→

*f* (RB)

▨ IRB 0          ▨ IRB 1

FIG. 16

FIG. 17

60MHz CARRIER BANDWIDTH

| 20MHz | 20MHz | 20MHz |
|---|---|---|
| RB SET #0 | GP | RB SET #1 | GP | RB SET #2 |

FIG. 18

START

DETERMINE, BY FIRST DEVICE, FIRST RESOURCE CONFIGURATION — S1910

END

FIG. 19

EP 4 654 699 A1

FIRST SL PRS RESOURCE
CONFIGURATION: S=7, M=4

SECOND SL PRS RESOURCE
CONFIGURATION: S=10, M=1

AGC | PSSCH DMRS | PSCCH | | | | PSSCH DMRS | | | | | PSSCH DMRS | | GP

0  1  2  3  4  5  6  7  8  9  10  11  12  13

FIG. 20

SECOND SL PRS RESOURCE CONFIGURATION: M=1

FIRST SL PRS RESOURCE CONFIGURATION: M=4

GP

PSSCH DMRS

PSSCH DMRS

PSCCH

AGC

0  1  2  3  4  5  6  7  8  9  10  11  12  13

FIG. 21

SECOND SL PRS RESOURCE CONFIGURATION: M=1

FIRST SL PRS RESOURCE CONFIGURATION: M=4

AGC

PSSCH DMRS

PSCCH

PSSCH DMRS

PSSCH DMRS

GP

0  1  2  3  4  5  6  7  8  9  10  11  12  13

FIG. 22

EP 4 654 699 A1

| DETERMINE, BY FIRST DEVICE, FIRST RESOURCE CONFIGURATION | S2310 |

| SELECT, BY FIRST DEVICE, SL PRS RESOURCE FROM RESOURCE POOL ACCORDING TO FIRST RESOURCE CONFIGURATION | S2320 |

FIG. 23

COMMUNICATION DEVICE 2400

DETERMINING MODULE 2410

SELECTING MODULE 2420

FIG. 24

APPARATUS 2500

PROCESSOR 2510

MEMORY 2520

TRANSCEIVER 2530

FIG. 25

## INTERNATIONAL SEARCH REPORT

| International application No. |
|---|
| **PCT/CN2023/107415** |

| A. | CLASSIFICATION OF SUBJECT MATTER |
|---|---|
| | H04W72/04(2023.01)i |

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, ENTXT, VEN, 3GPP: 定位, 参考信号, 侧链, 资源, 时隙, 符号, 配置, 梳, 标识, 解调参考信号, 连续, position+, locat+, PRS, SL, sidelink, resource, ?RB, RE, slot, symbol, configuration, comb, ID, ident+, DMRS

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115706627 A (CITIC KEZHILIAN TECHNOLOGY CO., LTD.) 17 February 2023 (2023-02-17) description, paragraphs [0285]-[0459] | 1-52 |
| X | CN 116264498 A (DATANG MOBILE COMMUNICATIONS EQUIPMENT CO., LTD.) 16 June 2023 (2023-06-16) description, paragraphs [0183]-[0278] | 1-52 |
| X | CN 113055136 A (DATANG MOBILE COMMUNICATIONS EQUIPMENT CO., LTD.) 29 June 2021 (2021-06-29) description, paragraphs [0105]-[0190] | 1-52 |
| X | CN 116097798 A (BEIJING XIAOMI MOBILE SOFTWARE CO., LTD.) 09 May 2023 (2023-05-09) description, paragraphs [0221]-[0300] | 1-52 |
| X | CN 115696563 A (VIVO COMMUNICATION TECHNOLOGY CO., LTD.) 03 February 2023 (2023-02-03) description, paragraphs [0039]-[0455] | 1-52 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 February 2024** | **11 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## EP 4 654 699 A1

## INTERNATIONAL SEARCH REPORT

International application No.

**PCT/CN2023/107415**

### C.    DOCUMENTS CONSIDERED TO BE RELEVANT

| Category* | Citation of document, with indication, where appropriate, of the relevant passages | Relevant to claim No. |
|---|---|---|
| X | KR 20230080316 A (ELECTRONICS AND TELECOMMUNICATIONS RESEARCH INSTITUTE) 07 June 2023 (2023-06-07)<br>description, paragraphs [0138]-[0191] | 1-52 |
| X | WO 2022165835 A1 (LENOVO BEIJING LTD.) 11 August 2022 (2022-08-11)<br>description, paragraphs [0039]-[0184] | 1-52 |
| X | WO 2023065290 A1 (ZTE CORP.) 27 April 2023 (2023-04-27)<br>description, paragraphs [0080]-[0108] | 1-52 |
| X | OPPO. "Discussion on SL positioning reference signal"<br>*3GPP TSG RAN WG1 #112, R1-2300301*, 17 February 2023 (2023-02-17),<br>section 2 | 1-52 |
| X | FUTUREWEI. "Discussion on SL positioning reference signal"<br>*3GPP TSG RAN WG1 #112, R1-2300063*, 17 February 2023 (2023-02-17),<br>section 2 | 1-52 |
| X | HUAWEI et al. "Considerations on SL-PRS design"<br>*3GPP TSG-RAN WG1 Meeting #112, R1-2300079*, 17 February 2023 (2023-02-17),<br>section 2 | 1-52 |
| X | NOKIA et al. "Design of SL positioning reference signal SL-PRS"<br>*3GPP TSG RAN WG1 #112, R1-2300040*, 17 February 2023 (2023-02-17),<br>section 2 | 1-52 |
| X | SAMSUNG. "Discussion on SL-PRS resource allocation schemes"<br>*3GPP TSG RAN WG2 Meeting #120, R2-2212647*, 04 November 2022 (2022-11-04),<br>section 2 | 1-52 |
| A | NOKIA et al. "On resource allocation for SL positioning reference signal"<br>*3GPP TSG RAN WG1 #112, R1-2300042*, 17 February 2023 (2023-02-17),<br>entire document | 1-52 |
| A | WO 2023123051 A1 (GUANGDONG OPPO MOBILE TELECOMMUNICATIONS CORP., LTD.) 06 July 2023 (2023-07-06)<br>entire document | 1-52 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 115706627 | A | 17 February 2023 | WO | 2023011347 | A1 | 09 February 2023 |
| CN | 116264498 | A | 16 June 2023 | TW | 202325092 | A | 16 June 2023 |
| | | | | WO | 2023109754 | A1 | 22 June 2023 |
| CN | 113055136 | A | 29 June 2021 | WO | 2021129060 | A1 | 01 July 2021 |
| | | | | CN | 113055136 | B | 29 June 2021 |
| | | | | CN | 115276941 | A | 01 November 2022 |
| | | | | EP | 4084506 | A1 | 02 November 2022 |
| | | | | EP | 4084506 | A4 | 08 March 2023 |
| | | | | US | 2023050447 | A1 | 16 February 2022 |
| CN | 116097798 | A | 09 May 2023 | | None | | |
| CN | 115696563 | A | 03 February 2023 | WO | 2023005837 | A1 | 02 February 2023 |
| KR | 20230080316 | A | 07 June 2023 | US | 2023171750 | A1 | 01 June 2023 |
| WO | 2022165835 | A1 | 11 August 2022 | EP | 4289199 | A1 | 13 December 2023 |
| | | | | CN | CN116889044 | A | 13 October 2023 |
| WO | 2023065290 | A1 | 27 April 2023 | CA | 3221377 | A1 | 27 April 2023 |
| WO | 2023123051 | A1 | 06 July 2023 | | None | | |

Form PCT/ISA/210 (patent family annex) (July 2022)